# EUROPÄISCHE PATENTSCHRIFT

(11) **EP 0 853 444 B1**
(45) Veröffentlichungstag und Bekanntmachung des Hinweises auf die Patenterteilung: **23.11.2005**
(21) Anmeldenummer: 98100043.3
(22) Anmeldetag: 03.01.1998
(51) Int. Cl.: F24C 15/10

(54) **Kochsystem mit einer Kontaktwärme übertragenden Elektro-Kochplatte**
Cooking system with an electric cooking-plate, transferring heat by conduction
Système à cuire avec une plaque de cuisson électrique, transférant la chaleur par conduction

(30) Priorität: 10.01.1997 DE 19700552; 18.01.1997 DE 19701640; 18.02.1997 DE 29702813 U
(43) Veröffentlichungstag der Anmeldung: 15.07.1998
(73) Patentinhaber: E.G.O. ELEKTRO-GERÄTEBAU GmbH, 75038 Oberderdingen (DE)
(72) Erfinder: Bogdanski, Franz,Dr., D-75038 Oberderdingen (DE); Lutz, Ose,Dr., D-75447 Sternenfels (DE)
(74) Vertreter: Patentanwälte Ruff, Wilhelm, Beier, Dauster & Partner

(56) Entgegenhaltungen:
- EP-A- 0 231 529
- EP-A- 0 453 313
- WO-A-96/09738
- WO-A-96/21384
- DE-A- 3 728 466
- US-A- 3 406 279

## Beschreibung

Derzeit sind drei Arten von Kochsystemen bekannt, die auf einer Platte stehende Kochgefäße im wesentlichen von unten erwärmen. Dies sind aus Gußeisen bestehende Kochplatten, die die Wärme überwiegend durch Wärmekontakt auf die Kochgefäße übertragen, Strahlungsheiz-Kochgeräte, bei denen Strahlungsheizkörper unterhalb einer Glaskeramikplatte angeordnet sind, und Induktionskochplatten, die durch Induktionsfelder die Energie in den Kochtopfboden übertragen. Die Gußkochplatten sind seit über einem halben Jahrhundert bewährt und sind an Robustheit, Zuverlässigkeit und Vielseitigkeit der Steuerbarkeit kaum zu übertreffen. Aufgrund ihres Werkstoffes haben sie jedoch relativ lange Anheizzeiten und, wenn man nur den Anheizbetrieb betrachtet, geringere Wirkungsgrade als die Strahlungsheizkörper und die mit Induktion arbeitenden Systeme.

Es sind schon Kontakt-Elektrokochplatten aus Keramikmaterial vorgeschlagen worden, die bezüglich der Anheizzeiten und -wirkungsgrade die Gußkochplatten übertreffen. Sie haben sich aber in der Praxis bisher nicht durchsetzen können. So ist aus der DE-A-37 28 466 eine Elektro-Kochplatte mit einem Kochplattenkörper aus Metall oder Keramiken wie Siliziumnitrid bekannt, die mittels eines Dickschicht-Widerstandes beheizt wird.

Die US-A-3406279 beschreibt ein Kochfeld aus Glaskeramik. Zum einen soll diese Glaskeramik leicht durchgebogen bzw. gewölbt sein. Des weiteren ist ausgeführt, inwiefern eine Seite mit einem Muster von Punkten versehen ist.

Die EP-A-231529 beschreibt eine Kochfläche aus Glaskeramik, bei welcher bestimmte Bereiche an der Oberseite relativ zu ihrer Umgebung um mindestens 0,01 mm oder mehr überhöht sind. Des weiteren wird eine gewisse Oberflächenstruktur beschrieben. Diese soll als eine Art Überhöhung Dekorschichten in tiefer gelegenen Bereichen schützen.

### AUFGABE UND LÖSUNG

Aufgabe der Erfindung ist es, ein kontaktwärmeübertragendes Kochsystem mit Elektrokochplatten zu schaffen, das in Bezug auf Wirkungsgrade, Steuer- und Regelbarkeit gegenüber bisherigen Kochsystemen verbessert ist.

Diese Aufgabe wird durch die Ansprüche 1 und 2 gelöst.

Wenn die Kochplatte so eben ist, daß sie in einem Temperaturbereich zwischen der Raumtemperatur und ca. 500K, also im Bereich der Betriebstemperatur der Kochplatte, über den größten bzw. wesentlichsten Teil ihres Kochbereiches weniger als 0,1 mm von einer idealen Ebene abweicht, dann kann mit ebenfalls derart ebenen Kochgefäßen gearbeitet werden. Sollte eine solche Ebenheit weder bei den Kochgefäßen noch bei der Elektrokochplatte einzuhalten sein, dann können die miteinander zusammenwirkenden Flächen z.B. gleichmäßig gewölbt sein, aber bzgl. ihres maximalen Abstandes voneinander die gleichen Bedingungen einhalten. Dabei könnten sie sich während der Erwärmung sogar verformen, jedoch beide gleichsinnig und in gleichem Maße, wobei sie beispielsweise Kugel- bzw. Kugelkalottenflächen bilden können.

Durch diese Maßnahmen wird eine extrem gute Wärmeübertragung sichergestellt. Sie führt dazu, daß die Temperaturdifferenz zwischen der Oberfläche der Kochplatte und dem Kochtopfboden auch bei größeren Leistungsdichten sehr klein werden kann. Die Elektrokochplatte braucht dann nicht wesentlich wärmer zu werden als das Kochgut, weil bisher bei kontaktwärmeübertragenden Kochplatten der sich zwischen der Kochfläche der Elektrokochplatte und dem Kochtopfboden bildende Luft-Spalt die relativ hohe Temperaturdifferenz zwischen Elektrokochplatte und Kochgut bestimmte. Dagegen sind die hauptsächlich durch Wärmeleitung bestimmten Temperaturdifferenzen im Material von Elektrokochplatte und Kochgefäß fast vernachlässigbar. Da bei den angegebenen angepaßten Gegebenheiten die Temperaturdifferenzen im eventuell entstehenden "Mikrospalt" aufgrund seiner geringen Spaltgröße sehr gering werden und im Bereich weniger K liegen, besteht auch bzgl. der Wärmeübertragung kaum noch ein Unterschied zu dem wirklich idealen Kontakt zwischen beiden Flächen. Dadurch wird die Wärme auch sehr gleichmäßig von der Elektrokochplatte abgenommen und dem Kochgefäß zugeführt. Dies führt einerseits dazu, daß die Kochplatte nicht mehr wärmeverteilend sein muß und andererseits wird der Kochtopfboden sehr gleichmäßig erwärmt, so daß lokale Temperaturunterschiede, die zu einem über die Fläche ungleichmaßigen Kochergebnis (Ansetzen) führen können, vermieden sind.

Wegen der Tendenz extrem gut aneinander angepaßter Körper, infolge des "Mikrospaltes" aneinander zu "kleben", kann ein System von Mikro-Belüftungskanälen in den zusammenwirkenden Oberflächen von Kochgefäß und/oder Kochplattenkörper vorgesehen sein. Sie können sternförmig und/oder in Umfangsrichtung verlaufen. Die von ihnen eingenommenen Flächenanteile sind sehr gering, so daß sie die Gesamt-Wärmeübertragung kaum behindern, wenn die Ebenheit im überwiegenden Teil des Kochbereiches eingehalten wird.

Als Werkstoff für den Kochplattenkörper ist nichtoxidische Keramik bevorzugt, und zwar insbesondere Siliziumnitrid (Si₃N₄). Dieses kann in Form einer Scheibe vorliegen. Dieses Material hat für den Zweck hervorragende Eigenschaften und kann auch durch Additive eingefärbt werden. In reiner Form hat es eine fast weiße Farbe.

Bei der Materialauswahl und der Gestaltung und Bemessung der Kochplatte sollten bestimmte Kriterien eingehalten werden, die teilweise sehr wichtig sind, um das gewünschte Ergebnis zu erzielen. So sollte beispielsweise die Wärmedurchgangszahl in der Kochplatte, nämlich das Verhältnis der Wärmeleitfähigkeit zur durchschnittlichen Kochplattenkörperdicke im Kochbereich kleiner als 20.000 W/m²K sein, vorzugsweise zwischen 6.000 und 12.000 W/m²K. Auch die Wärmeleitfähigkeit des Kochplattenmaterials sollte in einem bestimmten Rahmen liegen und insbesondere nicht zu hoch sein, nämlich zwischen 5 und 40 (vorzugsweise 8 und 20) W/mK. Während man denken sollte, für derartige kontaktwärmeübertragende Systeme sei eine besonders hohe Wärmeleitfähigkeit und Wärmedurchgangszahl wichtig, wurde festgestellt, daß die angegebenen Werte besonders vorteilhaft sind. Bei einer zu guten Wärmeleitfähigkeit wird die Wärme nämlich auch in der Kochplatte zur Seite hin abgeleitet, was Probleme beim Einbau, z.B. beim Einkleben der Kochplatte in eine Einbauplatte, machen kann.

Diese Werte, die insbesondere mit Siliziumcarbid zu erreichen sind, machen es für bestimmte Zwecke sogar möglich, eine durchgehende Herdplatte aus diesem Material und mit den angegebenen Eigenschaften zu verwenden, unter der verschiedene voneinander gesonderte Heizzonen angeordnet sind.

Die Wärmeausdehnungszahl des Kochplattenmaterials sollte zwischen 2 und 6 x 10⁻⁶ [1/K] liegen. Die Wärmeausdehnungszahl hat einen Einfluß auf die Ebenheit der Platte. Infolge der geringen Temperaturdifferenzen zwischen Ober- und Unterseite des Kochplattenkörpers sind jedoch die Dehnungsunterschiede, die zu einer erwärmungsbedingten Krümmung führen könnten, gering.

Für ein energiesparendes und schnell regelbares Kochsystem ist die Speicherenergie des Kochplattenkörpers von Bedeutung. Bezogen auf die installierte Leistung der Kochplatte sollte diese zwischen 7 und 130 J/W, bevorzugt zwischen 10 und 50 J/W betragen. Insbesondere beim Anheizen wird dadurch nur geringe Energie benötigt, um die Platte auf eine Arbeitstemperatur zu bringen. Auch hier spielt es aber eine wesentliche Rolle, daß der Kochplattenkörper selbst keine so hohe Temperatur annehmen muß, um die Wärme an das Kochgut weiterzugeben.

Die Oberflächenbelastung, d.h. die installierte Leistung je Flächeneinheit des Kochbereiches, kann durchaus im Bereich von bisherigen Hochleistungskochplatten liegen und zwischen 4 und 16 W/cm² (bevorzugt 5 bis 7 W/cm²) betragen.

Bedeutsam für das gesamte Kochsystem ist eine relativ geringe durchschnittliche Dicke des Kochplattenkörpers im Kochbereich, die zwischen 2 und 5 mm, bevorzugt ca. 3 mm betragen kann. In dieser Beziehung ist nichtoxidische Keramik, und insbesondere Siliziumnitrid, sehr bevorzugt, weil die hervorragenden mechanischen Eigenschaften dafür sorgen, daß auch bei so geringen Dicken die zu fordernden Eigenschaften bzgl. Ebenheit, Kratzfestigkeit etc. eingehalten werden. Es sind aber auch andere Materialien möglich, die aufgrund ihrer Eigenschaften die Einhaltung der zu fordernden Bedingungen für die Ebenheit ermöglichen. So könnte auch ein legierter Stahl mit einem hohen Nickelanteil, z.B. 42 % Ni, verwendet werden, der im Temperaturbereich zwischen Raumtemperatur und 500 K eine lineare Wärme-Ausdehnungszahl unter 12 x 10⁻⁶[1/K], vorzugsweise 4 bis 5 x 10⁻⁶[1/K], hat. Ein ähnlicher Stahl mit 36 % Ni ist unter dem Handelsnamen "INVAR" bekannt.

Der Kochplattenkörper sollte als eine an Ober- und Unterseite ebene Scheibe vorliegen, wobei an der Unterseite davon durchaus Abweichungen davon möglich sind, wie später noch beschrieben werden wird. Die Oberseite des Kochplattenkörpers sollte jedoch mindestens geschliffen sein, um die geforderte Ebenheit zu garantieren. Läppen und Polieren der Oberfläche führen zusätzlich zu einer Verbesserung der thermischen Verhältnisse. Zur Einhaltung der nötigen Kratzfestigkeit sind Härten über 1400 (HV 10 nach DIN 50133) bevorzugt.

Wichtig sind auch die elektrischen Eigenschaften. So wird ein spezifischer elektrischer Widerstand des Materials des Kochplattenkörpers über 1 x 10⁶, vorzugsweise über 1 x 10¹³ Ohm/cm angestrebt. Somit ist es möglich, daß die Beheizung der Kochplatte durch unmittelbar auf die Unterseite des Kochplattenkörpers aufgebrachte Beheizungen, beispielsweise Dickschichtbeheizungen, erfolgen kann. Derartige Dickschichtbeheizungen werden aus in Form einer aufgedruckten Paste erzeugten Schichten hergestellt. Es sind aber auch Dünnschichtwiderstände möglich, beispielsweise durch PVD- oder CVD-Verfahren aufgebrachte Widerstandsschichten (physikalische bzw. chemische Abscheidung im Vakuum).

Ferner kann erfolgreich mit Flammspritzverfahren gearbeitet werden, die auch mit Plasma arbeiten können. Auf diese Weise könnte auch eine Zwischenschicht aus einem als Haftvermittler und/oder elektrische Isolation dienenden Material, beispielsweise Aluminiumoxid (Al₂O₃) aufgespritzt werden. Eine elektrische Isolation kann insbesondere wichtig sein, wenn eine elektrisch leitfähige Keramik, beispielsweise Siliziumkarbid, verwendet wird.

Es sind jedoch auch andere Heizungsarten möglich, beispielsweise eine angedrückte oder angeklebte Folie, wobei in allen Fällen die eigentliche Heizleiterkontur durch Ausschnitte hergestellt werden kann (beispielsweise durch Laserbearbeitung, durch Erodieren, Ätzen oder Schleifen). Dabei ist eine Herstellung bevorzugt, bei der der Kochplattenkörper an seiner Unterseite entsprechend dem Verlauf der Heizwiderstandsbahnen profiliert ist, so daß die die Abstände bildenden Bereiche erhöht liegen. Danach wird das Heizwiderstandsmaterial ganzflächig auf die Unterseite des Kochplattenkörpers aufgebracht und schließlich dieser so übergeschliffen, daß das Material an den erhöht liegenden Stellen entfernt wird.

Als Heizwiderstände eignen sich auch insbesondere solche mit PTC-Charakteristik, d.h. mit ausgeprägt positiver Temperaturcharakteristik ihres Widerstandes. Wegen der sehr massearmen und kaum wärme-querleitenden Eigenschaften des Kochplattenkörpers ist es dabei vorteilhaft, wenn die Beheizung-sich abschnittsweise selbst abregeln kann. Dies kann dadurch geschehen, daß der Heizwiderstand aus an ihrer Ober- und Unterseite elektrisch kontaktierten Heizwiderstandsschichten, -blöcken oder -plättchen gebildet ist, die PTC-Charakteristik haben. Sie werden also senkrecht zur Kochplattenfläche vom Strom durchflossen. Bei Erreichen der Regeltemperatur verringern sie durch Anstieg des Widerstandes ihre Leistung und halten somit die Temperatur konstant, wobei sie vorzugsweise auf eine der Maximaltemperatur der Elektro-Kochplatte entsprechende Sprungtemperatur ihres Widerstandes eingestellt sind.

Regelung und Steuerung einer solchen Hochleistungskochplatte kommt große Bedeutung zu. Die Steuerung kann vorzugsweise durch eine Mehrtaktschaltung, d.h. Parallel-, Einzel- und/oder Reihenschaltung mehrerer Heizwiderstandsabschnitte erfolgen, wobei es bevorzugt ist, in einem Schaltbereich kleinerer Leistung eine Impulssteuerung zusätzlich vorzusehen, d.h. eine Taktsteuerung mit unterschiedlichen relativen Einschaltdauern.

Wegen der vorher schon geschilderten Gegebenheiten sollte die Regelung nicht über die gesamte Kochfläche summierend, sondern einzelne Bereich selektiv erfassend ausgebildet sein. So kann beispielsweise eine Flächenüberwachung mit NTC-Charakteristik der Temperaturbegrenzungs-Sensoren eingesetzt werden, z.B. eine Sensorschicht mit Durchschlagscharakteristik. Bei entsprechend schnell zugreifender Regelung könnte dabei der Heizleiter selbst eine der Kontaktschichten der Sensorschicht bilden.

Aufgrund der geringen Wärmedurchgangswiderstände erlaubt eine Messung der Temperatur der Kochplatte einen unmittelbaren und unverzögerten Rückschluß auf die Temperatur des Kochgutes. Es ist damit eine neuartige Steuerung des Kochvorganges durchführbar. So kann beispielsweise schon beim Ankochen eine kurzzeitige Abschaltung oder Reduzierung der Heizleistung erfolgen, wobei dann aus der Charakteristik der dann gemessenen Unstetigkeit im Temperaturverlauf auf den Grad der Ankopplung und andere Kriterien geschlossen werden kann, anhand derer dann der weitere Kochvorgang geregelt oder gesteuert wird. Eine solche "Kontrollabschaltung" kann dann auch noch im weiteren Verlauf des Kochvorganges mehrfach durchgeführt werden um den jeweiligen Zustand und Verlauf des Kochvorganges zu ermitteln.

Der Einbau der Kochplatte in eine Kochmulde, einen Kochherd und insbesondere eine dazugehörende Einbauplatte erfolgt vorzugsweise dadurch, daß der Kochplattenkörper selbsttragend in eine Ausnehmung einer Einbauplatte eingesetzt wird, z.B. die Öffnung einer Hartglas- oder Glaskeramikplatte oder auch in eine Edel- bzw. emaillierte Stahlplatte. Auch andere Werkstoffe, z.B. Naturstein- oder Kunststeinplatten sind geeignet. Ferner sind auch temperaturbeständige Kunststoff- oder kunststoffgebundene Platten, insbesondere mit hohen anorganischem Füllstoffanteil, einsetzbar, z.B. ein unter dem Handelsnamen "SILGRANIT" bisher für Spülbecken verwendeter Werkstoff (Fa. BLANCO, Oberderdingen).

Da es für den Gebrauch der Kochplatte sinnvoll ist, sie nahezu ebenengleich mit der sie umgebenden Einbauplatte einzubauen und da auch Verspannungen von dem Kochplattenkörper ferngehalten werden sollten, ist es sinnvoll, sie mit einem wärmebeständigen Kleber einzukleben. Dabei sollte sie jedoch geringfügig über der Oberfläche der Einbauplatte vorstehen, um sicherzustellen, daß ein darauf stehendes Kochgefäß auf der Kochfläche und nicht auf der Einbauplatte aufsteht.

Bei der Einklebung ist ein kritischer Punkt die Wärmebeständigkeit des Klebers. Hier hilft die relativ geringe Querleitung des Kochplattenkörpers und seine geringe Dicke mit, die Temperaturen an der Rand-Klebestelle gering zu halten. Es ist jedoch sinnvoll, für eine gute Wärmeableitung zur Einbauplatte oder zu anderen, darunter liegenden Medien, beispielsweise einer Mulde oder eines unteren Kochplattendeckels, zu sorgen. Es sollte also in diesem Bereich eine Wärmebrücke gebildet werden, die auch in Form eines Auflageringes für den Kochplattenkörper ausgebildet sein kann.

Vorzugsweise hat der Kochplattenkörper im Randbereich eine trichterförmige Anschrägung und liegt in einer entsprechend ausgebildeten Öffnung der Einbauplatte. Er kann, falls notwendig, von einem Auflagering abgestützt sein, der zur Toleranzüberbrückung zwischen den zusammenwirkenden Flächen der Einbauplatte und des Kochplattenkörpers dient und somit die genaue Lage der Ebenen von Kochplatte und Einbauplatte für die Klebung vorgibt.

Die Heizung kann mit einer Wärmedämmschicht unterlegt sein, wobei jedoch diese allenfalls eine Stützfunktion hat. Im wesentlichen ist die Einbauplatte vorteilhaft selbsttragend.

Da die Kochplatte aufgrund ihrer vergleichsweise niedrigen Oberflächentemperaturen und, im Gegensatz zu Strahlungsheizkörpern, nicht vorhandenen sichtbaren Eigenstrahlung ihren Beheizungszustand nicht selbst anzeigt, ist es sinnvoll, dafür besondere Mittel vorzusehen. So könnte beispielsweise im die Elektrokochplatte umgebenden Bereich der Einbauplatte eine im Betrieb beleuchtete Zone, z.B. eine umlaufende Ringzone vorgesehen sein. Sie könnte durch Ausnehmung im Dekor einer Hartglas-Einbauplatte gebildet sein und auch Lichtleiterelemente, wie einen glasartigen Ring, enthalten. Auch ist eine mittels Dickschichttechnik bedruckte Folie denkbar, die elektrolumineszente Eigenschaften hat.

Durch die Erfindung wird ein Kochsystem geschaffen, das mit extrem guten Wirkungsgraden arbeiten kann. Dies ist ein Ergebnis der sehr guten thermischen Ankopplung des Kochgefäßes und seines Inhaltes an die Beheizung mit geringen Temperaturdifferenzen zwischen diesen und der Tatsache, daß diese Beheizungsart sehr masse- und speicherarm ist. Dies wirkt sich besonders in den Ankochwirkungsgraden aus, die bei der herkömmlichen, aus Gußeisen bestehenden Kontakt-Kochplatte bei 60%, bei Glaskeramikstrahlungs-Kochsystemen bei 70%, bei Induktionskochstellen mit ihren hohen Anforderungen an Technik und Kochgefäße bei 80% liegen. Mit dem Kochsystem nach der Erfindung sind aber Ankochwirkungsgrade um 90% erreichbar. Ein weiterer großer Vorteil sind die geringen maximalen Temperaturen an Kochplatte und Beheizung, die nur wenig über den Temperaturen des Kochgutes liegen. Beim Kochen wasserhaltiger Speisen liegen sie also nicht viel über 100°C, während sie auch zum Braten oder Frittieren in siedendem Öl normalerweise nicht über 350°C kommen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im Folgenden näher erläutert. In den Zeichnungen zeigen:
- Fig. 1: eine schematische Seitenansicht einer in eine Einbauplatte eingebauten Elektrokochplatte,
- Fig. 2: eine schematische Ansicht ihrer Beheizung und ihre Temperaturfühler,
- Fig. 3: ein schematisches Schaltbild,
- Fig. 4: eine Detail-Unteransicht eines anderen Beheizungs- und Sensorschemas,
- Fig. 5: schematische (und stark überhöhte) Darstellung einer Elektrokochplatte und eines Kochgefäßes im vertikalen Schnitt,
- Fig. 6: ein stark vergrößerter schematischer Schnitt eines Kochplattenkörpers mit Beheizung,
- Fig. 7: einen Schnitt durch einen Kochplattenkörper und seine Beheizung,
- Fig. 8: eine entsprechende schematische Darstellung von Kochplattenkörperbeheizung und -regelung,
- Fig. 9 bis 17, 19 u. 20: verschiedene Einbaualternativen der Kochplatte in einer Einbauplatte im vertikalen Detailschnitt,
- Fig. 18: eine perspektivische Ansicht eines in Fig. 17 gezeigten Einbauringes,
- Fig. 21 u.22: je eine in eine Einbauplatte eingebaute Kochmulde mit Einbauplatte und je zwei Elektrokochplatten,
- Fig. 23: eine schematische Darstellung des Temperaturverlaufes an einer Kochplatte bei einer besonderen Regelungs- bzw. Temperaturüberwachungsfunktion,
- Fig. 24 bis 29:: schematische Ansichten der Beheizung, und
- Fig. 30: ein stark vergrößertes Detail des Kochplattenkörpers und seiner Beheizung.

### BESCHREIBUNG DES AUSFÜHRUNGSBEISPIELS

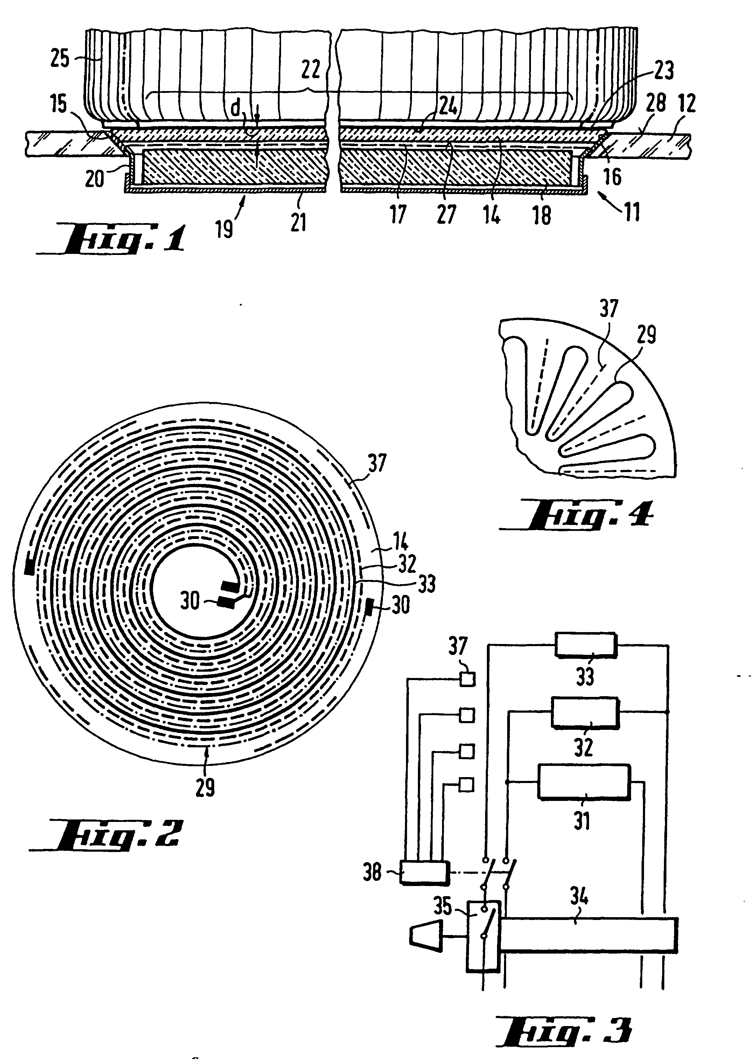

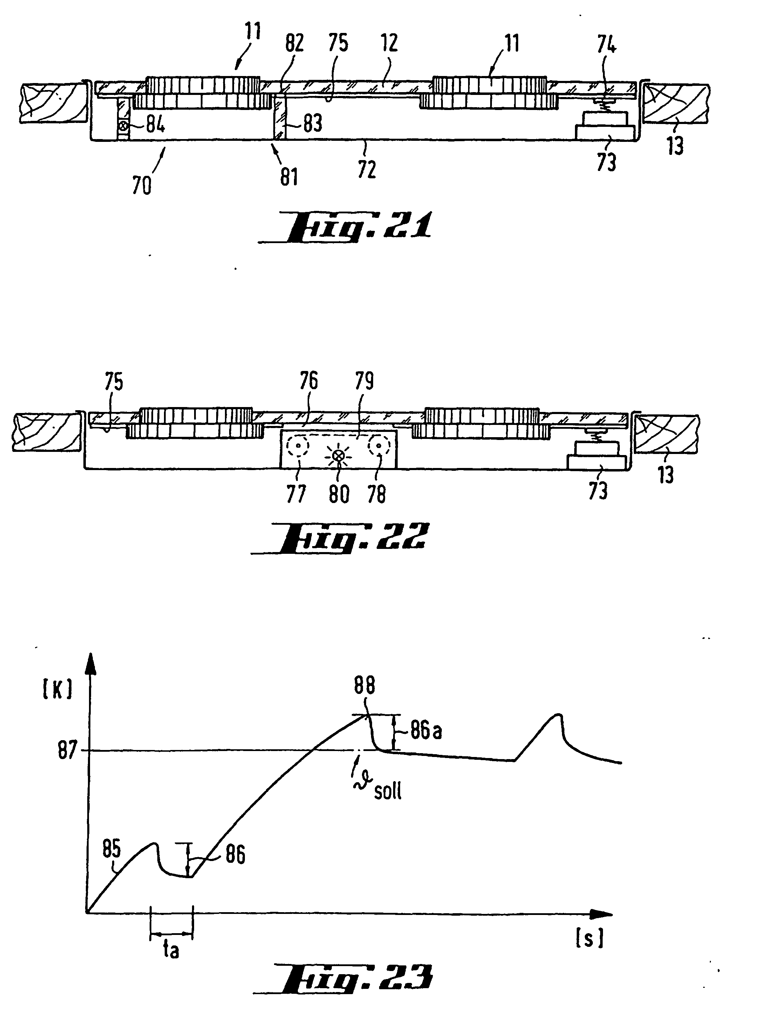

Fig. 1 zeigt ein Kochsystem mit einer Elektrokochplatte 11, von denen eine oder mehrere in eine Einbauplatte 12 eines Elektroherdes, einer Elektrokochmulde o. dgl. eingebaut sind. Diese kann wiederum in eine Arbeitsplatte 13 (Figuren 21, 22) eines Küchenmöbels o. dgl. eingesetzt sein.

Wesentlicher Bestandteil der Elektrokochplatte ist ein Kochplattenkörper 14. Er besteht aus einer meist kreisförmigen (Fig. 2) Scheibe aus nichtoxydischer Keramik, vorzugsweise aus gesintertem Siliziumnitrid (Si₃N₄). Andere Werkstoffe sind möglich, sofern die vorstehend und teilweise auch im folgenden näher erläuterten mechanischen, thermischen und elektrischen Eigenschaften eingehalten werden können. Die Dicke der Platte sollte eine Dicke zwischen 2 mm und 4 mm betragen.

Am Außenrand 15 ist der scheibenförmige Kochplattenkörper 14 konisch ausgebildet, und zwar sich nach unten verjüngend. Dieser konische Außenrand 15 ist passend zu einem entsprechenden konischen Öffnungsrand 16 der Einbauplatte 12 gestaltet. Die Einzelheiten des Einbaus werden später anhand der Figuren 9 bis 16 näher erläutert.

An der Unterseite des Kochplattenkörpers ist eine Heizung 17 in Form elektrischer Widerstands-Heizelemente angeordnet, die anhand der Figuren 2 bis 8 noch erläutert wird. Sie ist von einer Wärmedämmung 18, z.B. aus einer "Tablette" aus leicht verpreßtem pyrogenen Kieselsäure-Aerogel, unterlegt, die in einer aus Blech bestehenden Trägerschale 19 liegt. Sie wird anhand der Figuren 15 und 16 noch beschrieben. Im Ausführungsbeispiel der Figur 1 ist sie zweiteilig aus einem umlaufenden Ring 20 und einem unteren Bodenabschnitt 21 gebildet. Die Trägerschale 19 trägt nur die Wärmedämmung, da der Kochplattenkörper 14 selbsttragend in die Einbauplatte 12 eingesetzt ist.

Der von der Heizung 17 beheizte Koch- oder Arbeitsbereich 22 des Kochplattenkörpers 14 reicht bis auf einen eine thermische Isolierstrecke bildenden Abstand an den Außenrand 15 heran. Im überwiegenden Teil dieses Bereiches, vorzugsweise über die gesamte obere Kochfläche 23 der Elektrokochplatte ist der Kochplattenkörper extrem eben. Sowohl in der Makrowie in der Mikro-Unebenheit, d.h. in der großräumigen Welligkeit und in der Rauhigkeit, weicht die Oberfläche 23 nicht mehr als 0,1 mm, vorzugsweise sogar nicht mehr als 0,05 mm, von einer idealen Ebene ab. Zu diesem Zweck ist die Oberfläche des Kochplattenkörpers eben geschliffen oder auf andere Weise oberflächenbearbeitet.

Die gleichen Voraussetzungen gelten für die untere Fläche 24 eines daraufstehenden Kochgefäßes 25, so daß der natürlich stets vorhandene Mikrospalt 26 zwischen den Flächen 23 und 24 sich im Bereich zwischen 0 mm und höchstens 0,2 mm bewegt. Vor allem wird aber diese Ebenheitsbedingung nicht nur bei Raumtemperatur, sondern in einem Bereich zwischen dieser und ca. 500 K, vorzugsweise sogar bis 600 K, eingehalten, so daß im gesamten Arbeits-Temperaturbereich der Kochplatte diese minimale Spaltdicke gilt.

Bei bisherigen Kochplatten und den darauf verwendeten Kochgeschirren wurden diese Werte bei weitem überschritten. Vor allem änderte sich die Makrogestalt der Kochfläche im Arbeitstemperaturbereich durch unterschiedliche Wärmedehnungen, und zwar auch abhängig von den Bedingungen der Wärmezufuhr und -abnahme, d.h. der Kühlung der Oberfläche. Da trotz des Versuches, im kalten Zustand ebene Kochflächen zu schaffen, dies nicht eingehalten werden konnte und sich auch im Betrieb dauernd änderte, wurden selbst aufgrund bestehender Normen die unteren Flächen der Kochgefäße bewußt konkav ausgeführt, damit wenigstens am Außenrand dieser Spalt kleiner wurde und das Kochgefäß auf der Kochplatte nicht "kippeln" konnte.

Durch die Einhaltung der extremen Ebenheit und Anpassung an die zugehörige Fläche 24 des Kochgefäßes werden die Temperaturunterschiede zwischen der in direktem Wärmekontakt mit der unteren Fläche 27 des Kochplattenkörpers stehenden Heizung 17 und dem Inneren des Kochgefäßes und damit dem Kochgut sehr gering. Sie betragen nur wenige K. Dieser gesamte Temperaturunterschiede, der folgende Übergangs- bzw. Durchgangswerte beinhaltet: Wärmeübergangheizung/Kochplattenkörper, Wärmeleitung im Kochplattenkörper, Wärmedurchgang durch den Mikrospalt 26 sowie Wärmeleitung im Kochtopfboden, kann unter 50 K, vorzugsweise unter 30 K liegen und unterscheidet sich damit um eine Größenordnung von den Werten bisheriger Kochplatten. Diese geringen Temperaturdifferenzen tragen auch dazu bei, daß die sie bewirkenden Bedingungen, d.h. Ebenheit unter allen Temperaturbedingungen etc. dauerhaft eingehalten werden. Es wäre auch möglich, durch eine der Temperaturschichtung entgegenwirkende Materialbeeinflussung und/oder unterschiedliche Werkstoffschichtung eine "Anti-Bimetall-Wirkung" im Kochplattenkörper und/oder im Kochgefäßboden zu schaffen, indem die wärmeren Flächen geringer wärmedehnend ausgeführt werden.

Das Kochgefäß 25 ist in Fig. 1 in der üblichen Größenrelation gezeigt, d.h. entsprechend bisherigen Empfehlungen in der Größe der unteren Fläche 24 etwas größer als der Außendurchmesser des Kochplattenkörpers. Die untere Fläche des Kochtopfbodens steht daher nach oben etwas über die obere Fläche 28 der Einbauplatte über. Dieser Überstand der Kochfläche 23 über die Einbauplatte sollte zwar möglichst gering sein, beispielsweise in der Größenordnung von 0,5 mm bis 1 mm, jedoch sollte dieser Wert mit Sicherheit eingehalten sein, damit nicht der Mikrospalt 26 durch ein Aufstehen des Kochgefäßes auf der Einbauplatte unzulässig vergrößert wird.

Aufgrund der extrem guten Wärmeübertragung und der Ebenheit ist es allerdings kaum nötig, daß das Kochgefäß seitlich über die Kochfläche übersteht. Es ist sogar vorteilhaft, wenn das Kochgefäß im Durchmesser etwas kleiner ist als die Kochfläche (in Fig. 1 strichpunktiert angedeutet), weil dadurch das Kochgefäß keine Wärmebrücke zwischen der beheizten Fläche (Kochbereich 22) und dem Außenrand 15 des Kochplattenkörpers 14 bildet.

Der Kochplattenkörper besteht überwiegend aus Siliziumnitrid (Si₃N₄), das jedoch durch gewollte Zusätze oder auch durch ungewollte Verunreinigungen unterschiedliche Eigenschaften haben kann. Während das Material in reiner Form hellgrau bis gelblich weiß ist, kann es in weniger reiner Form auch recht dunkel erscheinen. Vorzugsweise kann es aber auch durch entsprechende Farbadditive in unterschiedlichen Farben, beispielsweise grün oder rotbraun, eingefärbt werden. Dies erhöht die Attraktivität in einem so sehr vom Design bestimmten Gebiet wie dem des Küchenbaus.

Das Siliziumnitrid kann Additive enthalten, die der Platte besondere mechanische, thermische, elektrische und/oder optische Eigenschaften verleihen. Wenn die Additive geringe optische Wirkung haben sollen, können sie einzeln oder aus einer Kombination von mindestens zwei der folgenden Substanzen bestehen: Yttriumoxid und andere Oxide der Seltenen Erden, Aluminiumnitrid, Aluminiumoxid, Magnesiumoxid, Calciumoxid einzeln oder als Verbindung untereinander.

Besonders vorteilhaft für das Gesamtbild der Kochplatte ist die Möglichkeit, den Kochplattenkörper farbig zu gestalten. Wenn einer Siliziumnitrid-Keramik als Additiv Siliziumcarbid in einem Gewichtsanteil von 2 % bis 50 % hinzugefügt wird, kann man Grüntöne erzeugen; Titannitrid und/oder Titancarbid und/oder Titancarbonnitrid in einem Gewichtsanteil von 2 % bis 30 % ergibt Braun/Goldtöne; Zirkonnitrid in einem Gewichtsanteil von 1 % bis 10 % Gelbtöne, während silizidbildende Übergangsmetalle (z.B. Fe, Cr, Ni, Mo, W, Co) einzeln oder in Verbindung oder Gemischen in einem Gewichtsanteil von 0,2 % bis 20 % Schwarztöne erzeugt. Kombinationen der Additive können zur Erzeugung von Zwischentönen (Farbstufen) eingesetzt werden. Ein hochreines Siliziumnitrid ist hellgrau bis gelblich weiß.

Die Platte wird durch Sintern hergestellt und an ihrer Bodenfläche eben geschliffen und/oder durch andere Feinbearbeitungsverfahren wie Läppen o. dgl. auf die nötige Oberflächenbeschaffenheit gebracht.

Bezüglich der technischen Eigenschaften sollten folgende Charakteristika beachtet werden:

Die Wärmeleitfähigkeit des Kochplattenmaterials sollte zwischen 5 und 40, vorzugsweise zwischen 8 und 20 W/mK betragen. Da die Mikro-Ebenheit sich durch Verkratzung etc. zu Ungunsten der Wärmeübertragung verändern könnte, sollte die Oberfläche des Kochplattenkörpers möglichst kratzfest sein. Dazu sollte die Härte über 1400 (HV 10 nach DIN 50133) betragen. Zur Mikro-Ebenheit ist zu bemerken, daß sich die für die Funktion wesentlichen Werte auf Durchschnitts-Rauhigkeitswerte beziehen. Einzelne tiefere Riefen beeinträchtigen jedenfalls die Wärmeübertragung viel weniger als viele weniger tiefe Vertiefungen oder gar ein hochstehender Grat. Insofern ist für das Kochplattenmaterial auch wichtig, daß es eine geringere Duktilität hat als Metalle es üblicherweise haben, weil dadurch bei einem Kratzer eine Gratbildung entfällt.

Der spezifische elektrische Widerstand des Materials des Kochplattenkörpers sollte über 1 x 10⁶, vorzugsweise über ca. 1 x 10¹³ Ohm/cm betragen. Dieser Wert, der außer von dem Grundmaterial auch von Beimengungen beeinflußt wird, sollte so hoch liegen, damit die Heizung unmittelbar auf die untere Fläche 27 des Kochplattenkörpers 14 aufgebracht werden kann, ohne daß eine Isolierschicht zwischenzuschalten ist. Dies ist aber ebenfalls möglich, beispielsweise durch Flammspritzen von Aluminiumoxid auf die Unterseite. Bei entsprechend geringer Schichtdicke ist die Beeinträchtigung des Wärmedurchganges gering. Außerdem kann diese Schicht als Haftvermittler für die Anbringung der Heizung dienen.

Die Wärmeausdehnungszahl des Kochplattenmaterials sollte zwischen 2 und 6 x 10⁻⁶ [1/K] betragen.

Außer den reinen Materialeigenschaften spielen auch Charakteristika eine große Rolle, die sich aus der Kombination von Materialwerten und entsprechenden Abmessungen bzw. Leistungswerten ergeben. Wichtig ist die Wärmedurchgangszahl in der Kochplatte (unter Ausklammerung der Wärmeübergangs-Widerstände an beiden Seitenflächen des Kochplattenkörpers). Sie ergibt sich aus dem Verhältnis der Wärmeleitfähigkeit (Lamda) zur durchschnittlichen Kochplattenkörperdicke (d) im Kochbereich. Hier ist ein Wert unter 20.000 W/m²K günstig, damit die die Wärme zum Kochplattenrand hin ableitende Wärmeleitung in der Kochplatte begrenzt bleibt, während durch die geringe Dicke des Kochplattenkörpers der Wärmedurchgang in Hauptwärmeflußrichtung, d.h. zwischen den beiden Flächen 24 und 27 ausreichend hoch ist.

Bei der Bemessung der installierten Leistung der Heizung ist folgendes zu berücksichtigen:

Die Speicherenergie des Kochplattenkörpers sollte sehr gering sein. Sie liegt zwischen 7 und 130 J/W, bevorzugt bei 10 bis 50 J/W. Dies garantiert schnelle Aufheizung und gute Anheizwirkungsgrade bei erhaltenen Regelmöglichkeiten. Die Oberflächenbelastung kann der üblicher Kochplatten entsprechend und zwischen 4 und 16 W/cm² (5 bis 7 W/cm²) betragen.

Figur 2 zeigt eine Ansicht des Kochplattenkörpers 14 von unten. Man erkennt in dünnen Bahnen mehrwindig spiralförmig aufgebrachte Heizleiterbahnen 29 mit Anschlußflächen 30, an denen beispielsweise durch mechanische Kontaktierung, Schweißen (z.B. mittels Ultraschall) oder Lötung Anschlußdrähte angebracht sein können. Die Heizleiterbahnen 31, 32, 33, die in jeweils drei zueinander parallelen Bahnen sechs bis sieben Spiralwindungen machen, liegen so eng, daß selbst bei Einschaltung nur einer oder einige dieser Bahnen eine gleichmäßige Beheizung möglich ist. Sie sind in Form von Dickschichtwiderständen direkt auf die Unterseite des Kochplattenkörpers aufgebracht, indem das entsprechende Muster mit einer Dickschichtpaste aufgedruckt wird und dann durch Wärmebehandlung der Heizleiter verfestigt wird. Aufgrund der Anschlüsse ist die in Fig. 3 gezeigte Schaltung möglich, bei der die einzelnen Heizleiterabschnitte 31, 32, 33 in einer ansich bekannten Sieben-Takt-Schaltung, z.B. mit einem Nockenschalter 34 oder auch elektronisch in einzelnen Schaltkombinationen geschaltet werden können, um zwischen einer höchsten Leistungsstufe (alle drei Heizleiter parallel) bis zu einer kleinsten Heizstufe (alle Heizleiter in Reihe) in den unterschiedlichen Kombinationen von Parallel-, Einzel- und Reihenschaltung sechs verschiedene Leistungsstufen hervorzubringen. In der untersten Leistungsstufe (Heizleiter 31 bis 33 in Reihe) kann zusätzlich über einen Vorsatzschalter 35 ein taktendes Leistungssteuergerät eingeschaltet werden, das noch geringere Leistungen durch unterschiedliche relative Einschaltdauern der taktenden Leistungszufuhr ermöglicht. Wird eine Vollwellen-Impulspaketstreuerung verwendet, kann die Heizung aus einem einzigen Widerstand bestehen.

Fig. 1 zeigt am Rand des Kochplattenkörpers Temperatursensoren 37, die in gleicher Weise mittels Dickschichttechnik aufgedruckt sind. Sie überwachen dort den wegen des Einbaus temperaturkritischen Randbereich. Sie sollten, wie alle Temperaturüberwachungsorgane der Kochplatte, nicht summierend geschaltet sein, sondern ihre Überwacherfunktion schon dann auslösen, wenn ein einzelner von ihnen seine Abschalttemperatur erreicht. Es ist daher in Fig. 3 angedeutet, daß der von Ihnen bediente Temperaturbegrenzer 37 jeweils einzeln mit ihnen in Verbindung steht und bei einem Ansprechen die gesamte Heizung abschaltet.

Fig. 4 zeigt ein anderes Heizleitermuster. Dort sind die Heizleiter 29 in Form einer runden Zick-Zack-Linie gelegt. In den nach außen offenen Bereichen zwischen den Heizleitern 29 sind Sensorbahnen 37 angeordnet.

Anhand von Fig. 1 wurde beschrieben, daß bei der dort gezeigten Ausführung die Kochfläche 23 extrem eben ist. Fig. 5 zeigt, in zur Veranschaulichung starker Überhöhung, eine Ausführung, bei der die Kochfläche 23 des Kochplattenkörpers 14 in Form einer Kugelkalotte ballig (konvex) nach oben gewölbt ist. Bei einer solchen Ausführung ist es notwendig, daß die untere Fläche 24 des Kochtopfbodens 39 die entsprechende Gestalt hat, d.h. in diesem Falle in gleicher Weise konkav gewölbt ist. Auch hierfür sind die für die Ebenheit aufgestellten Voraussetzungen einzuhalten, d.h. der Mikrospalt 26 zwischen den Flächen 23 und 24 sollte im Arbeitsbereich der Kochplattentemperatur nicht über 0,1 mm ansteigen. Der Kochplattenkörper 14 kann, wie gezeigt, schwach linsenförmig, so daß er eine ebene Unterseite behält, oder auch an der Unterseite entsprechend gewölbt sein.

Der Boden des Kochplattenkörpers kann bei der Ausführung nach Fig. 1 und 5 ebenfalls aus einer nicht oxydischen Keramik bestehen. Grundsätzlich sind hier jedoch keine Einschränkungen bzgl. der Materialwahl zu treffen, sofern die geforderten Ebenheits-Kriterien erfüllt sind.

Fig. 6 zeigt in starker Vergrößerung einen vertikalen Schnitt durch einen Kochplattenkörper 14. Bei ihm sind, ebenso wie in Fig. 5, die an den Rand 15 angrenzenden Bereiche mit einem abgeschrägten Übergang versehen, um so trotz des geringen Überstande über der Oberfläche 28 der Einbauplatte 12 ein möglichst problemloses "Überschieben" des Kochgefäßes 25 auf die und von der Kochfläche zu ermöglichen. Abgesehen von der Abschrägung 40 ist die Oberseite 23 der Kochfläche eben. Die Unterseite ist im wesentlichen auch eben, hat jedoch ein bei der Herstellung erzeugtes Profil 41. Es enthält vertieft das Muster der Heizungsverlegung, z.B. entsprechend dem in Fig. 2 gezeigten Muster. Zwischen diesen Vertiefungen 42 sind nach unten vorspringende Erhebungen oder Stege 43 ausgebildet.

Zur Herstellung der Heizung 17 wird die Unterseite ganzflächig mit einem Heizleitermaterial beschichtet. Dies kann beispielsweise durch Flammspritzen bzw. Plasmaspritzen erfolgen. Mit diesem Verfahren kann man relativ kostengünstig und bei großer Materialauswahlmöglichkeit Heizwiderstandsmaterialen aufbringen. Es ist nur schwierig, beim Flammspritzen seitlich scharf begrenzte Profile herzustellen. Bei der in Fig. 6 gezeigten Herstellungsweise kann jedoch die Beschichtung ganzflächig erfolgen, wobei durch die senkrecht zur Unterseite 27 erfolgende Spritzrichtung ohnehin die horizontalen Flächen bevorzugt beschichtet werden.

Danach wird die Unterseite 27 des Kochplattenkörpers 14 übergeschliffen, und zwar soweit, daß das auf den Stegen 43 abgelagerte Heizleitermaterial abgetragen wird. Es verbleiben dann lediglich die Heizleiterbahnen 29 in den jeweiligen Vertiefungen 41 und bilden somit das gewünschte Heizleitermuster bzw. -profil.

Fig. 6 zeigt ferner Belüftungskanäle 110, die in der Oberfläche 23 vorgesehen sind. Sie bilden ein System von sehr schmalen Kanälen, die radial und in Umfangsrichtung verlaufen und dafür sorgen, daß die ebenen Flächen 23, 24 nicht infolge Sogwirkung so aneinander haften, daß der Topf kaum abnehmbar ist. Ein Belüftungskanalsystem kann auch in der Fläche 24, d.h. im Kochtopfboden, vorgesehen sein. Das Belüftungskanal-System kann auch Bohrungen oder Öffnungen enthalten, die den Kochplattenkörper 14 und/oder, wenn das aus Dichtheitsgründen möglich ist, den Kochgefäßboden ganz oder teilweise durchdringen.

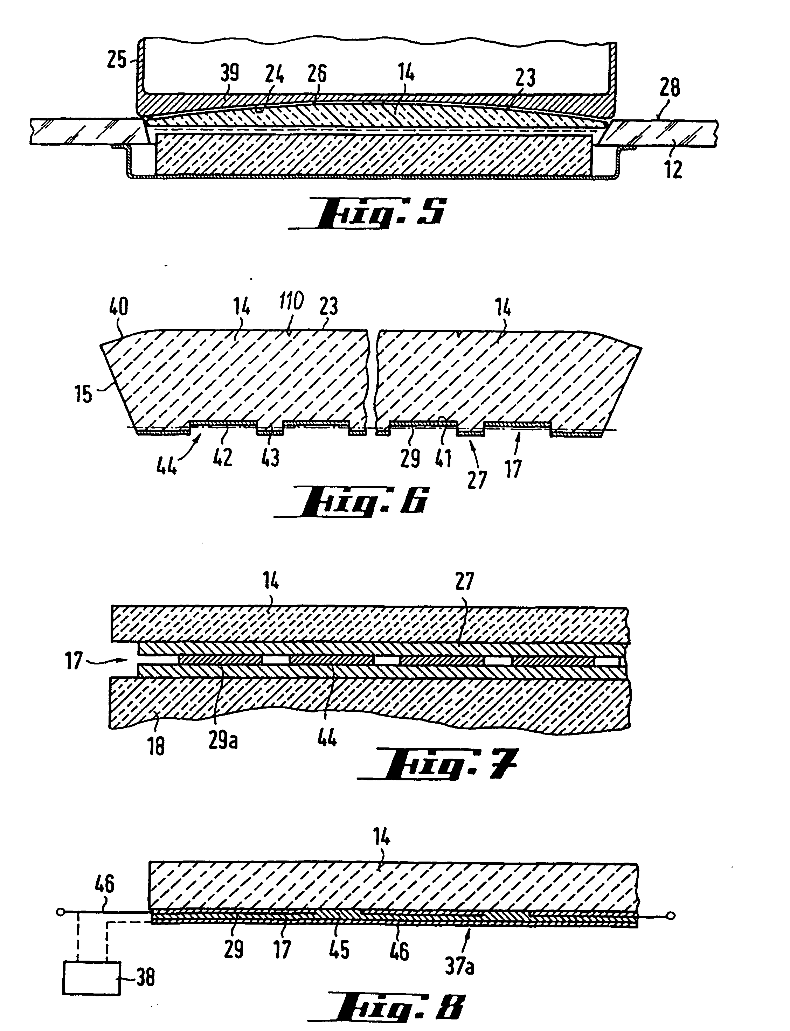

Fig. 7 zeigt in schematischer Darstellung die Heizung 17 eines Kochplattenkörpers 14, bei der die Heizung aus einzelnen Blöcken 29a aus einem Heizleitermaterial mit PTC-Charakteristik besteht. Ein solches Material ist beispielsweise Bariumtitanat. Die Plättchen 29a sind zwischen zwei Kontaktierungsfolien 44 eingelegt, von denen die eine sich an der Unterseite 27 des Kochplattenkörpers abstützt und die andere von der Wärmedämmung 18 angedrückt wird. Es ist auch möglich, diese Kontaktierungsfolien mit dem Kochplattenkörper und/oder den Heizleiterplättchen 29a auf andere Weise zu verbinden, beispielsweise durch wärmebeständigen und ggf. elektrisch leitenden Kleber.

Aufgrund der positiven Temperaturcharakteristik des Widerstandes (PTC), die die Plättchen 29 haben, fließt dort ein leistungsentsprechender Strom von der einen zur anderen Kontaktierungsfolie 44 nur so lange, bis die für die Sprungcharakteristik des gewählten PTC-Materials typische Temperatur erreicht ist, nämlich die durch die Materialeigenschaften des PTC-Materials bestimmten Begrenzungstemperatur. Bei ihr erfolgt ein sprunghafter Anstieg des elektrischen Widerstandes. Diese Art der Beheizung hat den Vorteil, daß sie ohne jeden gesonderten Temperaturfühler oder entsprechende Begrenzungsmaßnahmen Temperaturüberschreitungen verhindert, und zwar punktuell an den Stellen, an denen eine Überhitzung auftreten würde. Sie sichern also die Kochplatte nicht nur gegen generelle Überhitzung, sondern auch gegen "heiße Flecken", beispielsweise bei einem versehentlich verschoben aufgesetzten Topf.

Fig. 8 zeigt eine Ausführung, bei der der Kochplattenkörper 14 mit einer in beliebiger Weise, beispielsweise in Dickschichttechnik nach Fig. 1, aufgebrachten Heizung 17 versehen ist. Ein Temperatursensor 37a wird dadurch erzeugt, daß die Heizleiterbahnen 29 und auch die dazwischen liegenden, sie trennenden Abschnitte mit einer bei Raumtemperatur isolierenden Sensor-Zwischenschicht 45 überdeckt sind, z.B. aus einer Glasschmelze oder einer Polyimidfolie (Kapton). Diese Materialien haben eine NTC-Charakteristik, also einen bei einer bestimmten Temperatur sprunghaft abnehmenden elektrischen Widerstand, somit eine Art "Durchbruchs-Charakteristik".

Unterhalb dieser Sensor-Schicht 45 ist eine Sensor-Kontaktschicht 46, beispielsweise eine dünne Metallschicht aufgebracht.

Unabhängig von dem elektrischen Leistungsanschluß 46 der Heizung 17 und in einem anderen Stromkreis wird eine ggf. hochfrequente Sensorspannung zwischen den Heizleiterbahnen 29 und der Sensorkontaktschicht 46 angelegt. Bei einer Überhitzung fällt der Widerstand der Sensorzwischenschicht 45 sprunghaft und durch den damit entstehenden Schluß zwischen Heizleiterbahn 29 und Kontaktschicht 37a kann ein angeschlossener Temperaturbegrenzer 38 eine Überhitzung feststellen und die Heizung abschalten. Dies muß allerdings sehr kurzfristig geschehen, da anderenfalls über mehrere "Durchbrüche" sonst ein Kurzschluß zwischen einzelnen Heizleiterbahnen entstehen könnte. Diese Forderung entfällt, wenn beide Kontaktschichten elektrisch von der Heizung 17 getrennt sind.

Fig. 9 zeigt ein Detail des Einbaus des Kochplattenkörpers 14 in eine Einbauplatte 12. Es ist dort zu erkennen, daß zwischen dem trichterförmig ausgebildeten Öffnungsrand der Einbauplatte und dem entsprechend geformten Rand 15 des Kochplattenkörpers ein wärmebeständiger Kleber 47 eingebracht ist, der die Kochplatte unmittelbar in der Einbauplatte selbsttragend festlegt. Bei dem Kleber kann es sich um einen wärmebeständigen Silikonkleber handeln, der normalerweise bis zu Temperaturen von 250°C (300°C) beständig ist. Ein zylindrischer Abschnitt 48 sorgt für eine genaue Zentrierung. Bei der Einbauplatte 12 kann es sich um eine Hartglasplatte handeln. Es sind aber auch Platten aus Glaskeramik möglich, wenn dies wirtschaftlich sinnvoll ist. Auch Platten aus Natur- oder Kunststein, beispielsweise Granit, oder mit anorganischen, wärmebeständigen Füllstoffen versehene kunststoffgebundene Platten, wie "Silgranit" der Firma BLANCO, Oberderdingen, oder Edelstahl- oder emaillierte Stahlplatten sind möglich.

Da stets ein kleiner Abstand a zwischen der Kochfläche 23 und der Oberfläche 28 der Einbauplatte 12 eingehalten werden muß und infolge von Herstellungstoleranzen bei den Rändern 15 und 16, unterstützt durch die Konizität, sowie durch unterschiedliche Kleberdicken leicht Toleranzen auftreten könnten, die die Einhaltung dieses Abstands a in Frage stellen, kann gemäß Fig. 10 mit einer Lehre 49 gearbeitet werden. Diese wird in die Öffnung 50 der Einbauplatte eingeführt und faßt mit einem Flansch 51 unter diese. Die Oberfläche 52 des in die Öffnung 50 eingreifenden Abschnittes der Lehre 49 bildet somit eine von der Geometrie der Ränder 15, 16 unabhängige Bezugsfläche, auf die der Kochplattenkörper 14 aufgelegt werden kann, während er mittels des Klebers 47 eingeklebt wird.

Fig. 11 und 12 zeigen z.B. entsprechend Fig. 10 angefertigte Einbauvarianten mit geringerer Konizität der Ränder 15, 16 (Fig. 11) bzw. eine rein zylindrische Anordnung der Klebefuge (Fig. 12).

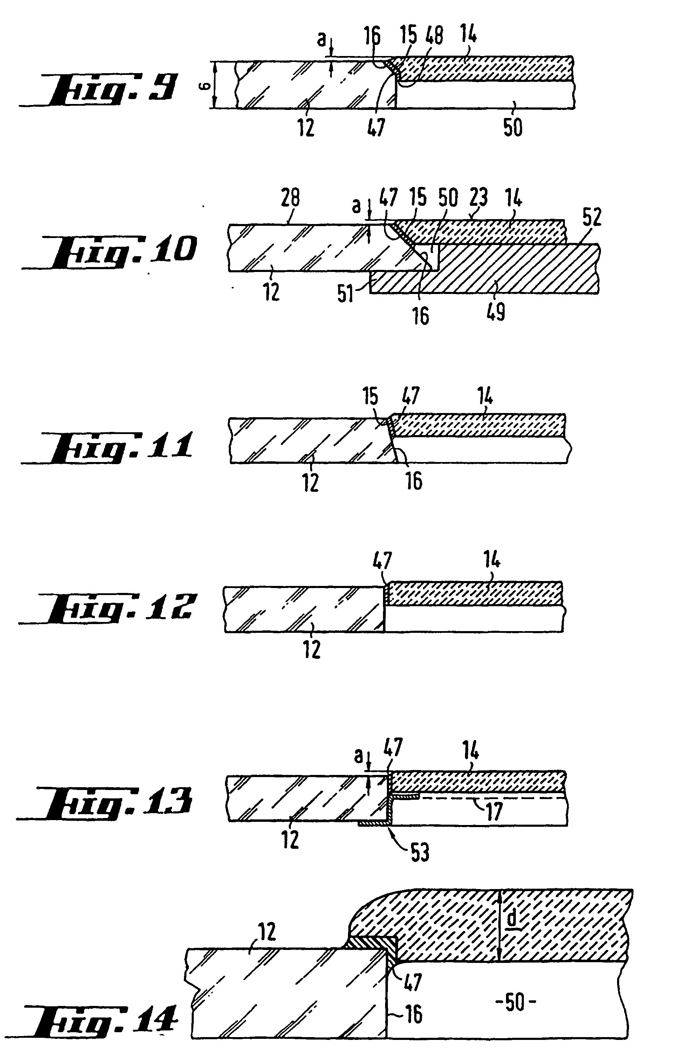

Fig. 13 zeigt einen Einbauring 53 bei einem Einbau mit zylindrischen Öffnungen bzw. Rändern entsprechend Fig. 12. Der im Querschnitt Z-förmige Einbauring übernimmt die Aufgabe der Lehre 49 und stellt somit die Einhaltung des Abstandes a sicher, hat aber zusätzlich die Aufgabe, eine Wärmebrücke im Randbereich zu schaffen, so daß von der Beheizung 17 zum Rand strömende Wärme über diesen Ring abgeleitet wird, ggf. auch zu einer Trägerschale 19, wie in Fig. 1 dargestellt. Der dort gezeigte konische Einsatzring 20 könnte also hier durch den Z-Ring 53 ersetzt werden. Auf diese Weise wird die temperaturempfindliche Klebestelle 47 thermisch entlastet.

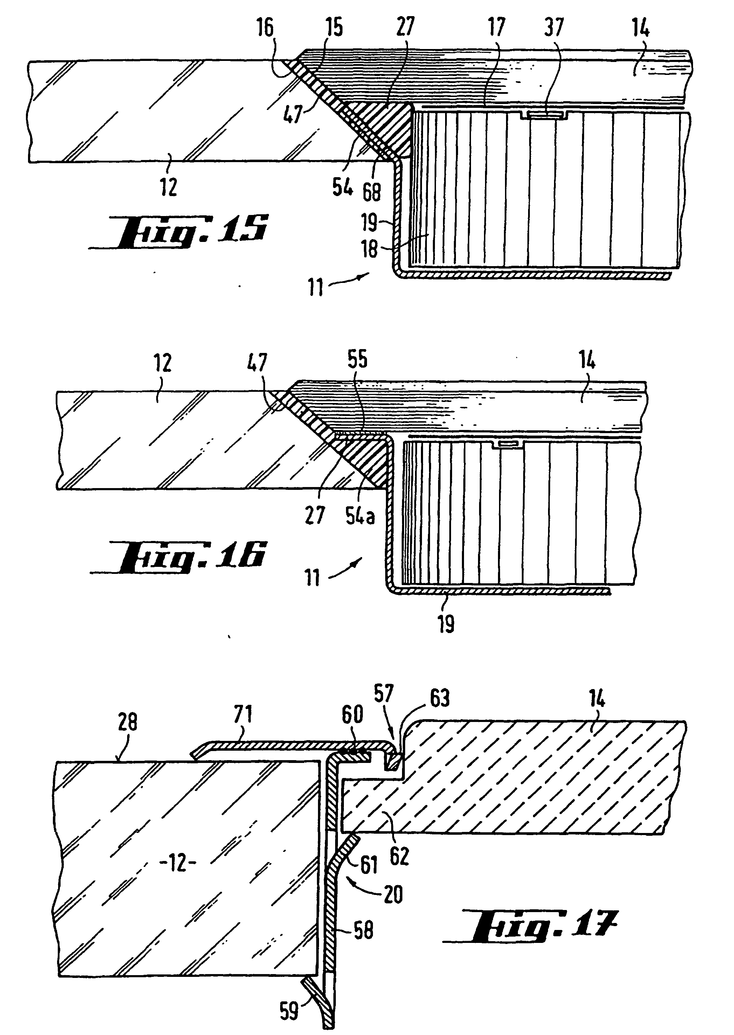

Fig. 14 zeigt einen Aufbau mit ziemlich hoch aufgesetzter Kochplatte. Sie hat an ihrer Oberseite eine Abrundung 40a im Randbereich und an dessen Unterseite eine winklige Randausnehmung, zwischen der und einer im übrigen zylindrischen Öffnung 50 der Einbauplatte eine winklige Kleberschicht eingebracht ist.

Fig. 15 zeigt einen Einbau mit konischen Rändern 15, 16, bei der die Trägerschale 19 aus einem Stück gefertigt ist und an ihrer oberen Randkante eine trichterförmige Aufweitung 54 aufweist, die zu dem trichterförmigen Rand 16 der Einbauplatte 12 paßt.

Die dreieckige Ausnehmung 68 zwischen dem Randbereich der Unterseite 27 des Kochplattenkörpers und der Randaufweitung 54 kann bereits bei der Herstellung der Kochplatte mit einem Silikonkleber oder einem anderen Kitt o. dgl. gefüllt werden. Damit ist die Trägerschale 29 mit dem Kochplattenkörper 14 verbunden und die dazwischen eingelegte oder angebrachte Heizung 17 sowie ein ggf. angebrachter Temperatursensor 37 und die Wärmedämmung 18 sind in ihren richtigen Positionen zueinander festgelegt. Eine so entstandene "Einzelkochplatte" kann dann mittels einer Silikonkleberschicht 47 in die Öffnung 50 der Einbauplatte 50 eingesetzt werden. Eine andere Möglichkeit, eine "Einzelkochplatte" zu schaffen, die nachträglich in eine Einbauplatte 12 eingesetzt wird, ist in Fig. 16 dargestellt. Dort ist der Kochplattenkörper 14 im unteren Randbereich mittels einer Metall-Keramik-Verbindung 55 mit einem nach außen ragenden Flansch 54a der Trägerschale 19 verbunden. Es entsteht so ebenfalls eine handhabbare und handelsfähige Kochplatteneinheit, die wiederum mittels einer Kleberschicht 47 in die trichterförmige Öffnung der Einbauplatte eingesetzt werden kann.

Zu den Figuren 14 bis 16 ist zu bemerken, daß sie eine Überbrückung eines relativ großen seitlichen Spaltes zwischen der Einbauplatte und dem Kochplattenkörper ermöglichen. Dies kann notwendig sein, da beispielsweise bei der Herstellung der Einbauplatte aus Hartglas dieses in ungehärtetem Zustand bearbeitet werden muß. Während des Härtevorganges ist ein die Maßhaltigkeit beeinträchtigender Verzug unvermeidbar. Um diese Toleranzen zu überbrücken, muß ein relativ großer von dem Kleber 47 überbrückter Abstand vorgesehen werden. Bei den Ausführungen nach Fig. 15 und 16 sind die entsprechenden Silikonfugen sichtbar, während sie vorteilhaft bei der Ausführung nach Fig. 14 abgedeckt und optisch nicht mehr störend sind.

Figuren 17 und 18 zeigen eine kleberfreie Einbauvariante, bei der der mit einer oberen umlaufenden Randausnehmung 57 versehene Kochplattenkörper 14 von einem Einbauring 20 getragen wird. Dieser besteht aus einem im wesentlichen zylindrischen Ringabschnitt 58 (siehe auch Fig. 18), der mittels widerhakenartigen, als teilweise ausgestanzte Lappen 59 aus seiner Oberfläche heraus abgebogenen Halteelementen 59 sich einerseits an der Unterseite der Einbauplatte 12 festhält und andererseits mittels eines durch Punktschweißung 60 mit ihm verbundenen Auflagering 71 auf der Oberfläche 28 der Einbauplatte sich abstützt. Wie in Fig. 18 schematisch angedeutet ist, sind aus dem Ringabschnitt 58 mehrere Haltelaschen 59 für jede der mehreren am Umfang verteilten Halteelementgruppen ausgestanzt, und zwar mit sehr geringem Unterschied in der axialen Höhe, so daß Toleranzen oder bewußte Unterschiede in der Dicke der Einbauplatte 12 berücksichtigt werden können. Aus dem vorbereiteten Einbauring werden dann entweder nur die Laschen herausgebogen, die für die jeweilige Einbauplattendicke passen, oder zum Toleranzausgleich würden alle Laschen ausgebogen werden und nur diejenigen einrasten, die beim Hineindrücken des Ringes 20 von oben in Einrastposition kommen.

Außer den nach außen abgebogenen Halteelementen 59 sind ebenso hergestellte Halteelemente 61 nach innen gerichtet, die unter den sich unterhalb der Randausnehmung 57 bildenden Flansch 62 greifen und diesen nach oben gegen eine nach unten gerichtete Abbiegung des Auflageringes 71 drücken. An dieser Abbiegung kann ebenfalls ein widerhakenartiges Halteelement 63 nach innen abgebogen sein und sich im Bereich der Randausnehmung 57 zur klapperfreien Festlegung des Kochplattenkörpers 14 an diesem verkrallen.

Fig. 19 zeigt einen Einbauring 20, der sich ebenfalls mit Halteelementen 59 der in Fig. 17 und 18 gezeigten Art an der Unterseite der Einbauplatte 12 festhält. Der Auflagering 71 ist einstückig mit dem Ringabschnitt 58 aus Blech hergestellt. Die Festlegung des Kochplattenkörpers 14 erfolgt durch in dem Ringabschnitt 58 vorgesehene Ausprägungen 58, die in Vertiefungen 64, beispielsweise eine Ringnut, am Außenumfang des Kochplattenkörpers eingreifen.

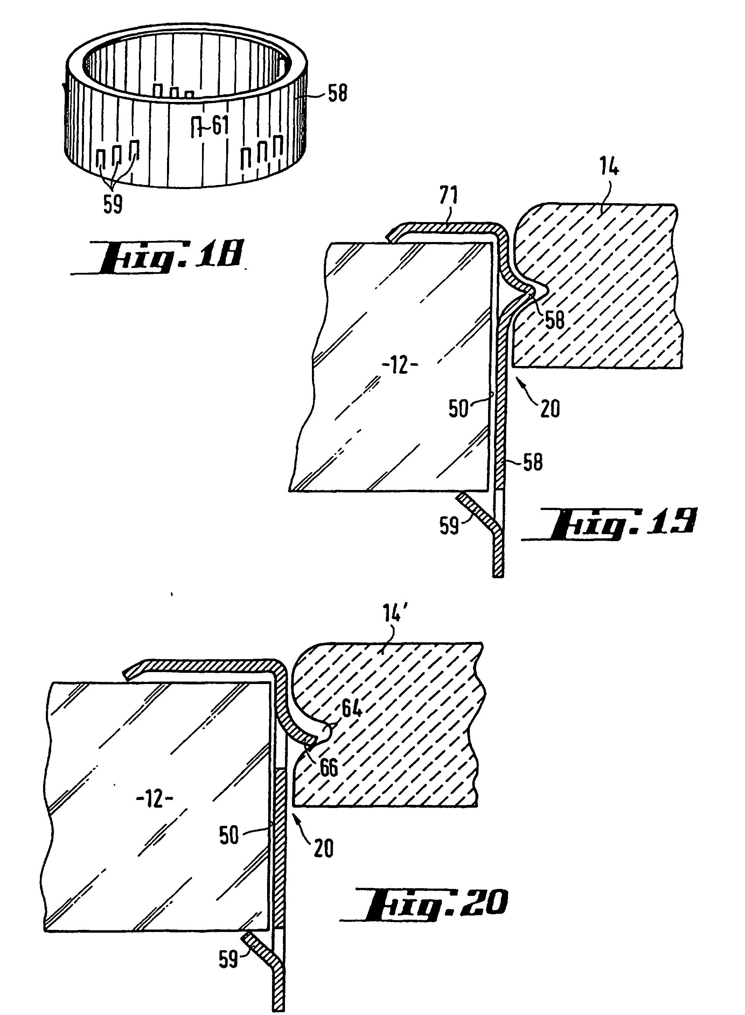

Die Ausführung nach Fig. 20 ist mit einem Ring 20 versehen, der dem nach Fig. 19 entspricht, bis auf die Tatsache, daß statt der Ausprägung 65 ein von oben nach unten widerhakenartig gerichtetes Halteelement 66 in die Randausnehmung 64 des Kochplattenkörpers eingreift. Bei Fig. 19 und 20 kann also der Kochplattenkörper aufgrund der elastischen Eigenschaften des Blechringes 20 in den Ring eingeschnappt werden. Dabei kann vorgesehen sein, daß dieses Einschnappen nur möglich ist, solange der Ring 20 noch nicht in die Öffnung 50 der Einbauplatte 20 eingebaut ist, so daß der Kochplattenkörper 14 im in die Einbauplatte eingebauten Zustand gegen versehentliches Herausdrücken gesichert ist.

Fig. 21 zeigt eine Kochmulde 70, die in einem flachschalenförmigen Blechgehäuse 72 eine Einbauplatte 12 mit mehreren, meist vier, darin eingebauten Elektrokochplatten 11 enthält. Die Kochmulde ist in eine Arbeitsplatte 13 eingebaut. In ihr ist eine Bedieneinrichtung 73 vorgesehen, die mit Berührungs- bzw. Annäherungsschaltern 74 (Touch-Control) arbeitet, die durch die Einbauplatte 12 hindurch betätigbar sind.

Aufgrund der Tatsache, daß die Einbauplatte aus einem transparenten Material, beispielsweise Hartglas oder Glaskeramik besteht, jedoch im Gegensatz zu Strahlungsheizungen thermisch nur gering belastet ist, ist es möglich, ein an der Unterseite der Einbauplatte vorgesehenes Dekor 75 in Form von einer oder mehrerer Schichten herzustellen, die nicht so hohen thermischen Anforderungen entsprechen müssen und auch nach der Glasherstellung noch angebracht werden können. Es ist daher vorgesehen, das Dekor durch ein Druckverfahren, beispielsweise durch Siebdruck auf die Unterseite der Einbauplatte aufzubringen. Dadurch ergibt sich die Möglichkeit, das Dekor 75 mittels individueller Bild- und/oder Textverarbeitung z.B. durch Computer-Grafik zu erstellen, so daß es sowohl in der Form als auch in der Farbgestaltung individuellen Kundenwünschen angepaßt werden kann. Dies kann einerseits dazu benutzt werden, innerhalb einer Modellreihe verschiedene Varianten farblicher oder gestalterischer Art auswählbar zu machen oder auch tatsächlich gänzlich und kundeneigene Entwürfe zu verarbeiten oder das Dekor dem jeweiligen Küchenmöbeldesign anzupassen.

Außer einer Aufbringung im Druckverfahren kann das Dekor auch auf einer Folie enthalten sein, die an der Unterseite der Einbauplatte angedrückt und/oder von dieser gehalten wird.

Figur 22 zeigt eine Ausführung, die der nach Figur 21 entspricht, wobei jedoch in dem Dekor 75, das fest an der Einbauplatte 75 vorgesehen ist, ein Fenster 76 ausgebildet ist, unter dem ein Bild- oder Texträger 77 angeordnet ist.

Während es auch bei der Ausführung nach Fig. 21 möglich ist, im Rahmen des individuell gestalteten Dekors Textinformationen anzubringen, beispielsweise in Form besonders beliebter Rezepte, kann durch den Bild- oder Textträger 77 diese Information auch auswechselbar bzw. weiterschaltbar gemacht werden. In Fig. 22 ist ein System mit zwei Aufwickelrollen 78 für eine Folie 79 vorgesehen, die ggf. von unten durch eine Lampe 80 zu beleuchten ist. Durch manuelle und/oder programmgesteuerte oder automatische Weiterschaltung kann jeweils ein bestimmter Abschnitt der Folie unter das Fenster gebracht werden, so daß beispielsweise aufgrund einer Eingabe über das Bedienfeld 73 jeweils ein bestimmtes Rezept oder ein Abschnitt aus einem Kochbuch in dem Fenster erscheint.

Der Bild- oder Texträger kann auch mittels eines Projektionsgerätes arbeiten oder auch andere Mittel zur Sichtbarmachung benutzen, beispielsweise Bildschirme. Da bei moderneren Kochgeräten ohnehin in die Bedieneinrichtung eine elektronische Datenverarbeitung integriert ist, könnte diese auch zur Steuerung einer solchen Anzeige eingesetzt werden, indem beispielsweise in Abhängigkeit von einem bestimmten Kochprogramm die entsprechenden Rezepte sichtbar gemacht werden oder umgekehrt, bei Einstellung eines bestimmten Rezeptes gleichzeitig der Ablauf des Kochprogrammes vorgegeben oder vorgeschlagen wird. Selbst eine Menuesteuerung des Kochvorganges über diese Anzeige wäre möglich. Es wird also eine Anzeigemöglichkeit geschaffen, die durch die Einbauplatte hindurch die Sichtbarmachung unterschiedlichster optischer Elemente ermöglicht, beginnend von rein dekorativen Elementen über begleitende Informationen bis zu unmittelbaren Steuerungsinformationen zur aktiven Beeinflussung des Kochvorganges. Es könnten beispielsweise auch Informationen über den jeweiligen Kochzustand, Temperaturen etc. dort mit eingeblendet werden.

In Fig. 21 ist noch dargestellt, daß bei einer der Kochplatten 11 eine Zustandsanzeige 81 vorgesehen ist. Sie enthält im Dekor 75 einen ringförmigen transparenten oder unterbrochenen Bereich 82, der die Kochplatte 11 umgibt. Darunter ist ein zylindrischer Ring aus Glas oder glasartigem Material, wie Plexiglas angeordnet, der einen Lichtleiter 83 bildet. Er wird im Bereich von ein oder mehreren Ausschnitten von Lampen 84 beleuchtet und verteilt dieses Licht über den gesamten Umfang, so daß bei Einschaltung der Lampen 84 von der Oberseite der Einbauplatte her ein Leuchtring um die Kochplatte herum zu erkennen ist. Die Lampen werden eingeschaltet, wenn die Kochplatte in Betrieb gesetzt wird und die Ausschaltung erfolgt sinnvollerweise erst nach Abkühlung der Kochplatte. Damit wird einerseits eine Zustands- aber auch Heißanzeige geschaffen. Durch verschiedene Farben können auch unterschiedliche Temperatur- oder Leistungsstufen angezeigt werden. Auch eine abschnittsweise Beleuchtung, beispielsweise in Form mehrerer zuschaltbarer Sektoren, können unterschiedliche Zustände signalisieren.

Es ist auch möglich, mit anderen Formen von Lichtleitern oder auch mit direkter Beleuchtung zu arbeiten, beispielsweise mit einer ringförmigen Glimmlampe.

Eine bevorzugte Möglichkeit der Steuerung der Leistung der Elektrokochplatte wurde bereits anhand von Figur 3 erläutert. Dort wurde eine taktweise Regelung nur in einem unteren Leistungsbereich vorgesehen. Eine Regelung der Gesamtenergie mittels Taktung ist bei der Erfindung deswegen problematisch, weil durch die sehr geringe Wärmekapazität und das entsprechend schnelle Ansprechen die Leistungsimpulse in sehr kurzer Folge geschaltet werden müßten, was wegen der sogenannten "Knackrate" sowohl von Netzbetreiberseite als auch wegen der elektromagnetischen Verträglichkeit (Funkstörungen) unzulässig sein könnte. Es ist daher eine ansich bekannte Leistungssteuerung mit Vollwellen-Impulspaketen bevorzugt. Dabei werden jeweils einzelne oder mehrere Voll oder Halbwellen des Wechselstromes, jeweils im Nulldurchgang geschaltet, mit entsprechenden Unterbrechungen dazwischen so zusammengestellt, daß ein symmetrisches Impulspaket entsteht. So könnte beispielsweise ein aus drei Vollwellen bestehendes "Paket", das dementsprechend bei 50 Hz eine Dauer von 0,06 Sekunden hat, entweder jeweils nur eine positive und negative Halbwelle oder deren je zwei haben, so daß eine Regelung mit dem Faktor 1, 2/3 und 1/3 entsteht, ohne daß irgendwelche Netz- oder funkstörenden Einflüsse entstehen. Normalerweise sind diese Impulspakete wesentlich länger und haben daher noch größere Variationsmöglichkeiten. Sie können auch selbst wiederum getaktet werden, so daß sich weitere Möglichkeiten ergeben. Einzelheiten dieser Art der Steuerung und die ebenfalls bekannten elektronischen Mittel zu ihrer Durchführung sind in der DE-A-42 08 252 sowie in den parallelen EP-A-561 206 und US-A-5 488 214 beschrieben, auf die zum Zwecke der Offenbarung hier ausdrücklich Bezug genommen wird.

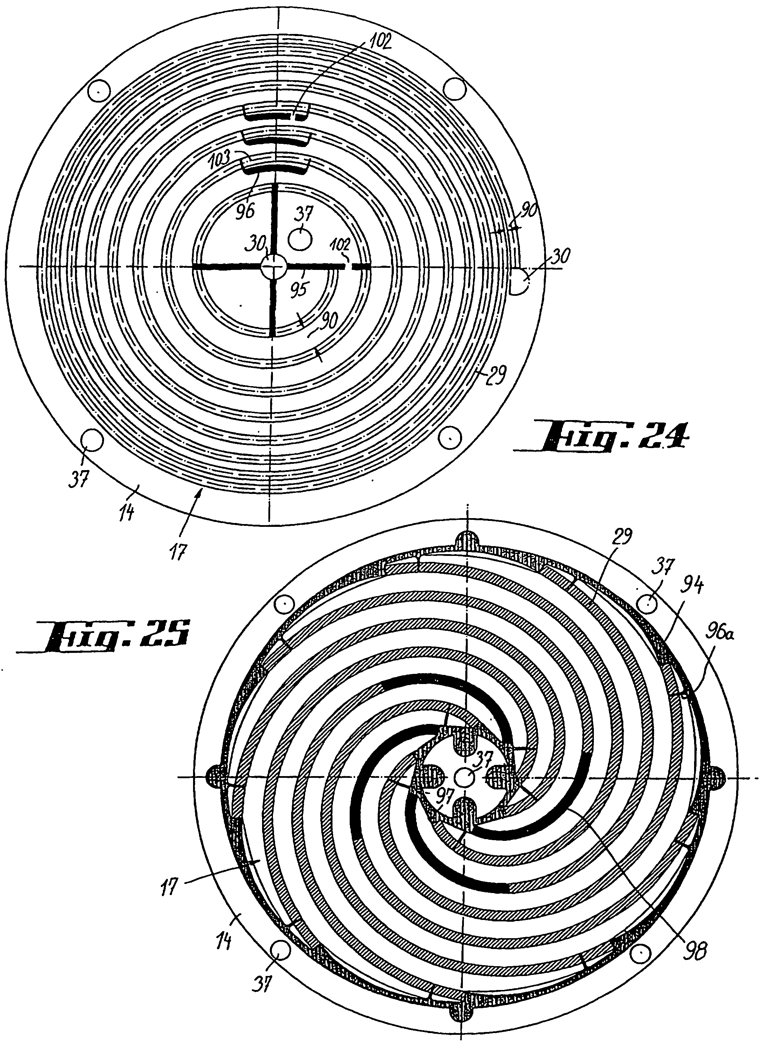

Fig. 23 zeigt eine Möglichkeit der Regelung bzw. Steuerungsbeeinflussung, die dadurch ermöglicht wird, daß die Ankopplung des Kochgutes und des Kochgefäßes an die Heizung und damit auch an die Temperatursensorik der Elektrokochplatte bei der Erfindung extrem gut ist. Fig. 23 zeigt ein Diagramm der Temperatur in Kelvin über der Zeit in Sekunden. Schon während der Anheizphase 85 kann durch eine kurzfristige Abschaltung der Leistung über einen Zeitraum tₐ ein Maß für die jeweilige Güte der Ankopplung ermittelt werden, die außer der für die Kochplatte festliegenden Werte auch durch die Güte des Kochgeschirrs und die Wärmeabnahme durch das Kochgut bestimmt ist. Dieser Wert 86 ist also ein Temperaturabfall, der an einem in der Kochplatte enthaltenen Sensor gemessen wird, ggf. auch an der Beheizung selbst. Er entsteht dadurch, daß während des relativ kurzen Zeitraums tₐ, der nur wenige Sekunden betragen muß, die gesamte Kochplatte einschließlich des Sensors auf die jeweilige Topfguttemperatur heruntergekühlt wird. Wenn dann weiterbeheizt wird, kann die Abschalt bzw. Abregelung bei einem Temperaturwert erfolgen, der um den Wert 86a über der Soll-Temperatur 87, auf die das Kochgut aufgeheizt werden soll, liegt. Dabei ist der Wert 86a von dem Wert 86 abhängig oder diesem gleich. Die Abhängigkeit kann durch entsprechende Versuche jeweils für unterschiedliche Ankopplungsverhältnisse der bestimmten Kochplatte etc. ermittelt werden.

Auch nach dem Ausschalten bei Erreichen der Soll-Temperatur am Ausschaltpunkt 88 sinkt die gemessene Temperatur wieder auf einen Wert ab, der der Soll-Temperatur, d.h. der Kochguttemperatur, weitgehend entspricht. Auch beim Weiterkochen kann dann mit dem Differenzwert 86a gearbeitet werden, indem die Temperatur nur so hoch getrieben wird, bis diese Differenz wieder erreicht ist.

Es läßt sich aber auch aufgrund dieser Werte dann ein für den Kochzustand typischer Leistungswert ermitteln, mit dem weiter gesteuert werden kann. So braucht beispielsweise beim Weiterkochen die Leistungszufuhr nicht größer zu sein, als beispielsweise das 1,1-fache der Verlustleistung durch Abstrahlung oder Konvektion vom Kochgefäß etc.

Die Erfindung ermöglicht es also aufgrund des extrem guten und schnellen Zugriffes, die Temperaturfühler an der Elektrokochplatte zu einem direkten Rückschluß auf die Kochguttemperatur zu verwenden.

Fig. 24 zeigt die Unteransicht eines Kochplattenkörpers 14 mit seiner Beheizung 17. Die Beheizung ist in Dickschichttechnik ausgeführt. Die Heizleiterbahnerr 29 werden also in Form einer die entsprechenden Widerstandsmaterialien enthaltenden Paste aufgedruckt und anschließend durch Nachbehandlung, z.B. Wärmebehandlung, verfestigt. Es sind jedoch auch die anderen beschriebenen Herstellungstechniken für die Heizleiterbahnen möglich.

In Fig. 24 ist eine durchgehende Heizleiterbahn 29 vom äußeren Anschluß 30 zu dem im Zentrum liegenden Anschluß 30 vorhanden. Sie verläuft in Form einer Spirale, die im Außenbereich relativ geringen Abstand 90 hat, während dieser Abstand zum Inneren der Spirale immer größer wird. Dieses entspricht den Anforderungen an den Kochbetrieb, bei denen eine Leistungskonzentration im Außenbereich erwünscht ist.

Der Anschluß im Zentrum erfolgt über vier speichenartig vom Mittelanschluß 30 ausgehende Anschlußbahnen 95, die die innere Spiralwindung und teilweise auch die daran anschließende kontaktieren. In der gezeichneten Form ohne die Trennstelle 102 würde also die innere Spiralwindung kurzgeschlossen und damit außer Funktion sein. Durch Auftrennen dieser Anschlußbahnen 95 mittels eines Lasers aufgrund einer Widerstandsmessung der jeweiligen Beheizung können fünf verschiedene Konfigurationen der wirksamen Leiterbahnlänge geschaffen werden. Eine zusätzliche Möglichkeit der Variation der Leiterbahnlänge und damit ihres Gesamtwiderstandes bieten drei an Spiralwindungen vorgesehene Abgleichbrücken 96, die kurze Abschnitte 103 der Leiterbahn kurzschließen und ebenfalls durch Auftrennung mittels Laser außer Funktion gesetzt werden können. Beim Ausführungsbeispiel sind durch die Trennstellen 102 nur dreiviertel der inneren Spiralwindung und zwei der Abschnitte 103 außer Funktion gesetzt.

Es ist damit möglich, bei einigen Aufbringungsverfahren für Heizleiterbahnen, insbesondere bei der Dickschichttechnik, unvermeidliche Abweichungen im Gesamtwiderstand der Heizung 17 zu korrigieren, und zwar in zahlreichen Stufen. Die vorgesehene Beheizung in nur einer Leiterbahn eignet sich besonders für die vorher beschriebene Vollwellen-ImpulspaketSteuerung. Temperatur-Sensoren 37 können am Umfang verteilt und im Zentrum vorgesehen sein.

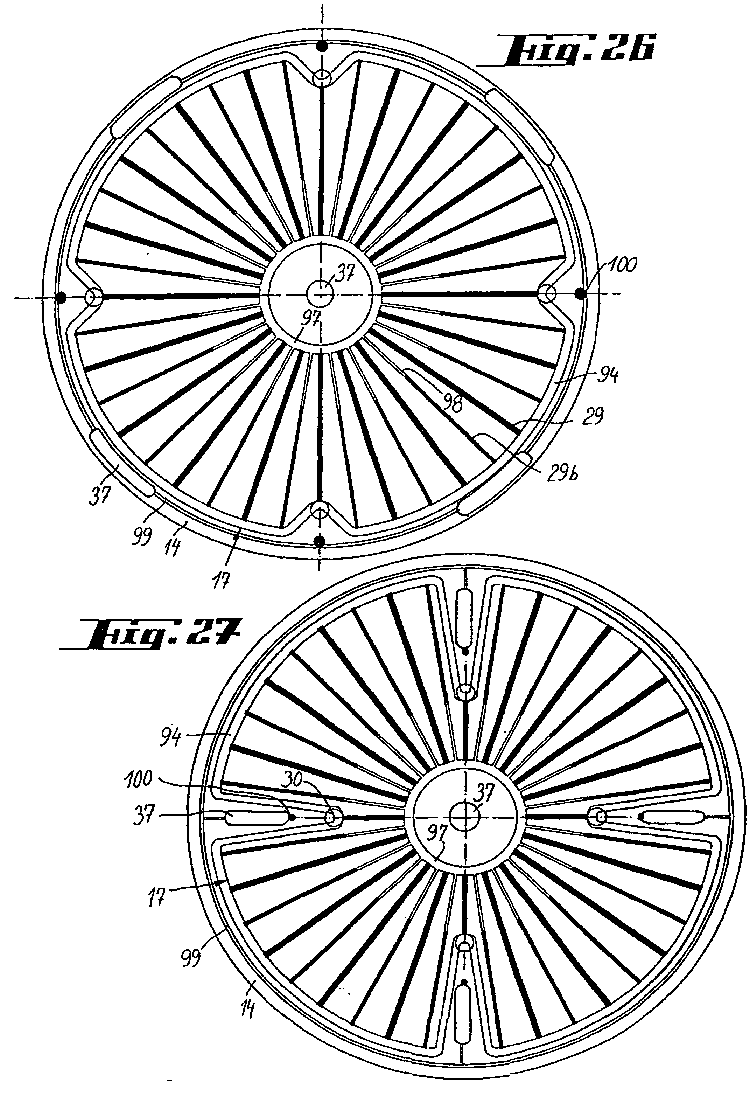

Fig. 25 zeigt eine Ausführung mittels zahlreicher zueinander parallelgeschalteter spiralförmiger Heizleiterbahnen 29. Sie gehen von einer äußeren ringförmigen Zuleitungsbahn 94 aus, verlaufen jeweils um etwas mehr als eine halbe Spiralwindung zu einer inneren Zuleitungsbahn 97, die einen Mittelsensor 37 umgibt.

Um eine Verringerung der Leistungsdichte im Zentrum herbeizuführen, sind bei einigen der parallelgeschalteten Leiterbahnen Kurzschlußabschnitte 98 vorgesehen, die die widerstandswirksamen Leiterbahnlängen der entsprechenden Leiterbahnen 29 verkürzen bzw. auf einen äußeren Bereich begrenzen. Diese Kurzschlußabschnitte können durch eine andere, besser leitfähige Paste gebildet sein oder auch durch entsprechend dickeren oder mehrfachen Auftrag der Widerstandspaste oder Überdruckung der Widerstandspaste mit einer gut leitfähigen, beispielsweise Kupfer enthaltenden Paste. Überhaupt ist bei der Gestaltung der Widerstände auch eine Variation der Widerstandswirksamkeit durch Variation der Breite oder Dicke der Leiterbahnen möglich.

Zum Abgleich sind Abgleichbrücken 96a vorgesehen, die aus dem gut leitfähigen Material der Zuleitungsbahnen 94, 97 bestehen, und jeweils von diesen bis zu einem Heizleiterbahnabschnitt reichen, der relativ dicht an sie angrenzt. Durch die Spiralform läßt sich dies mit relativ kurzen Brücken bewerkstelligen, die dann entsprechend aufgetrennt werden können, um den Widerstand der einzelnen Heizleiterbahnen 29 zu beeinflussen.

Fig. 26 zeigt eine Anordnung der Heizung 17, bei der die einzelnen Heizleiterbahnen 29 sternförmig radial von der äußeren Zuleitungsbahn 94 zur inneren, ebenfalls im wesentlichen kreisförmigen Zuleitungsbahn 97 verlaufen. Die einzelnen sternförmig verlaufenden Heizleiterbahnen, von denen beispeilsweise vierzig vorgesehen sind, sind also parallelgeschaltet, was durch entsprechend hohen Widerstand der einzelnen Heizleiterbahnen möglich ist. Es sind zwei Gruppen von Heizleiterbahnen vorgesehen. Während die eine Gruppe zwischen den Zuleitungsbahnen 94, 97 durchgehend ausgebildet ist, sind die dazwischenliegenden Heizleiterbahnen 29b der anderen Gruppe in ihrem widerstandswirksamen Teil auf den äußeren Umfangsabschnitt beschränkt und innen durch Kurzschlußabschnitte 98 mit der Zuleitungsbahn 97 verbunden.

Die Sensoren liegen ebenfalls zentral und über den Außenumfang verteilt und sind mit Sensor-Anschlußbahnen 99 mit Sensor-Anschlüssen 100 verbunden, die jeweils im Bereich von Einbuchtungen der äußeren Zuleitungsbahn 94 vorgesehen sind. Es ist somit möglich, jeden Sensor 37 einzeln anzuschließen und sein Signal einzeln auszuwerten. Die Sensor-Anschlußbahnen können ebenfalls als gedruckte Leiterbahnen ausgebildet sein.

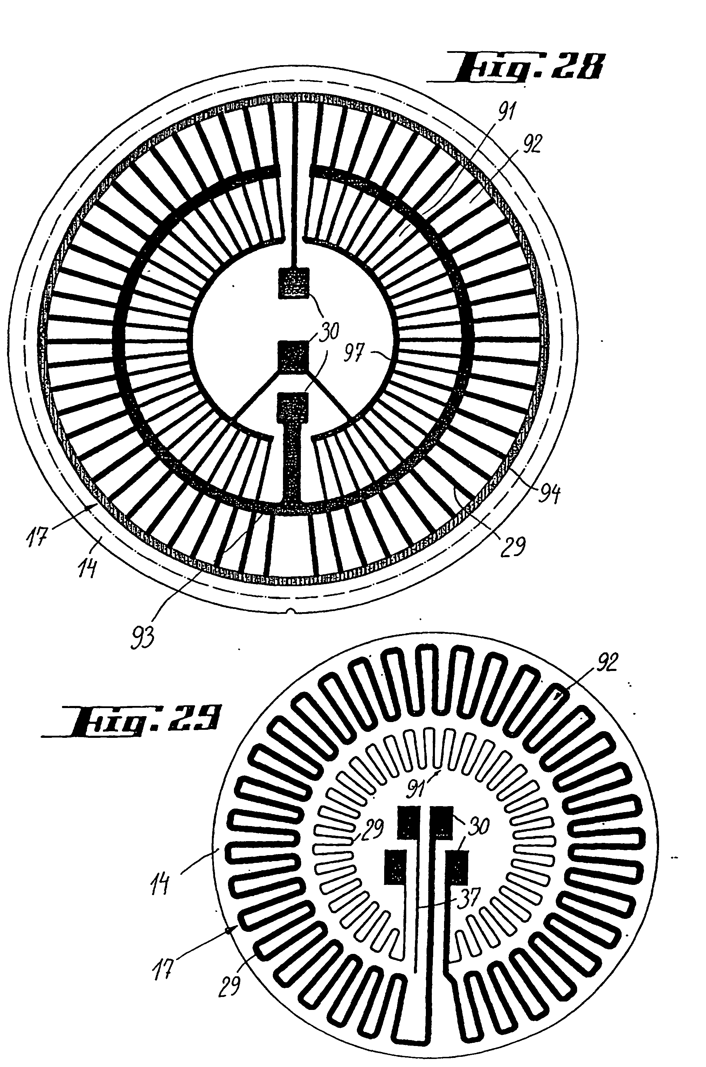

Fig. 27 zeigt eine Ausführung, die der nach Fig. 26 in allem entspricht. Dort sind jedoch die Sensoren 37 in dem Bereich der Einbuchtungen 101 der Zuleitungsbahn 94 vorgesehen und in diesem Bereich auch an die Anschlüsse 100 angeschlossen. Die Sensor-Anschlußbahn 29 läuft um und bildet den äußeren Anschlußpol der Sensoren.

Fig. 28 zeigt eine Zweikreis-Ausführung einer Kochplatte. Die Anordnung der Heizleiterbahnen 29 ist, wie in Fig. 26 und 27, radial, jedoch ist zwischen den äußeren und inneren Zuleitungsbahnen 94, 97 noch ein mittlerer im wesentlichen kreisförmiger Zuleitungsstrang 93, ebenfalls als gedruckte Leiterbahn ausgebildet, vorgesehen. Diese drei Zuleitungsbahnen 93, 94, 97 sind über ihre Anschlüsse 30 einzeln anschließbar, so daß es möglich ist, die beiden sich dadurch bildenden konzentrischen Heizzonen 91, 92 gesondert zu betreiben. Es ist also möglich, nur die mittlere Hauptheizzone 91 allein einzuschalten, um ein kleineres Kochgefäß zu beheizen, oder diese zusammen mit der äußeren Zuschaltheizzone 92 zu betreiben, um die volle Größe der Elektrokochplatte zu beheizen und dementsprechend ein größeres Kochgefäß beheizen zu können. Die Kochplatte nach der vorliegenden Erfindung eignet sich besonders dazu, weil infolge der geringen Wärmequerleitung im Kochplattenkörper 14 die Heizzonen ohne besondere Abschottung klar begrenzt bleiben, so daß im Bereich des Zuleitungsstranges 93 sich selbst eine thermische Grenze zwischen beiden Heizzonen bildet.

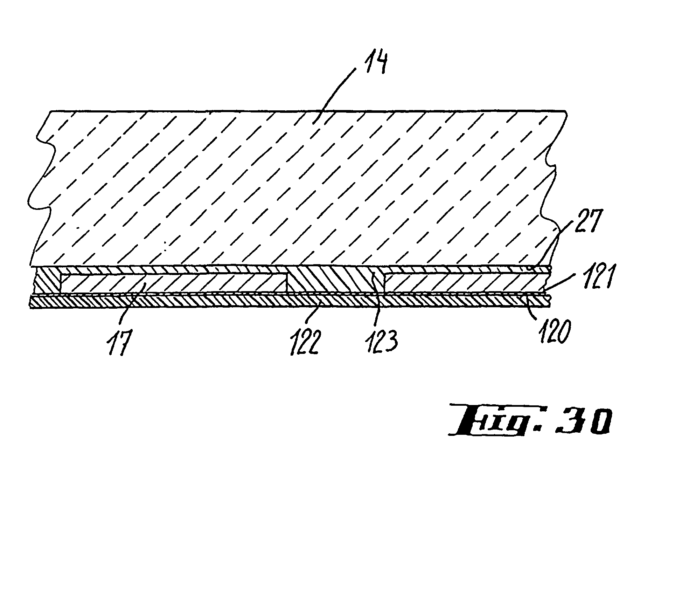

Fig. 29 zeigt ebenfalls eine Zweikreis-Ausführung, bei der die Heizleiterbahnen 29 in beiden Heizzonen 91, 92 jeweils als kreisförmiger Mäander geführt sind und von dort zu mittleren Anschlüssen 30 verlaufen. Ein weiterer Anschluß ist für einen in diesem Falle streifenförmig ausgeführten Sensor 37 (vgl. auch Fig. 4) vorgesehen.

Figur 30 zeigt ein stark vergrößertes Detail des Kochplattenkörpers mit daran angebrachter Heizung, wobei insbesondere im Bereich der Heizung und ihrer Befestigung die Dickenverhältnisse stark überhöht sind, um die Darstellung übersichtlich zu machen. Die Heizung 17 besteht aus einem dünnen Band aus elektrischem Widerstandsmaterial, beispielsweise einem Flachband oder einer Folie, die auf die vorher beschriebene Weise in eine entsprechende Kontur gebracht wurde. Sie ist mit ihrer vom Kochplattenkörper 14 abgewandten Rückseite 120 mittels einer dünnen Kleberschicht 121 auf eine Isolierfolie 122 geklebt, beispielsweise eine Polyimidfolie, wie sie unter dem Handelsnamen "Kapton" bekannt ist. Die Kleberschicht kann eine wärmebeständige Kleberschicht sein. Es ist jedoch auch möglich, den Heizer auf andere Weise auf der Folie anzubringen. Er könnte beispielsweise auch auf die Folie aufgedampft oder aufgespritzt sein.

Danach wird die entsprechend vorbereitete Rückseite 27 des Kochplattenkörpers, z.B. durch Aufspritzen, mit einer flüssigen Kleberschicht 123 überzogen. Auch dabei handelt es sich um einen wärmebeständigen Kleber, der vorzugsweise gut wärmeleitend ist. Dies kann z.B. durch Einlagerung von Metallpartikeln geschehen. Dieser Kleber bildet eine dünne und die Wärmeübertragung zur Kochplatte hin kaum behindernde Schicht zwischen der Heizung und dem Kochplattenkörper 14 und füllt auch die Zwischenräume zwischen den Heizwiderständen isolierend aus. Bei dem Kleber ist darauf zu achten, daß er zwar wärmeübertragend, jedoch elektrisch isolierend ist.

Nach der Aushärtung ist die Heizung fest mit dem Kochplattenkörper verbunden und liegt unter der Klebstoffschicht und der Folienüberdeckung gut geschützt. Dadurch können sich eventuelle Risse, die sich bei einem Betrieb der Keramikkochplatte nun im direkten Bereich der Heizleiter in der Klebung zwischen Leiterbahn und Keramikplatte durch die entstehende Temperaturwechselbelastung entstehen können nicht störend auswirken. Da die dickere Wärmeleitkleberschicht in den Zwischenräumen der Heizwiderstände 17 keinen oder geringeren Wechselbelastungen ausgesetzt ist, bleiben diese Zonen rißfrei und erhalten die "Anpreßkraft" der Heizung und somit engste Spaltmaße im Leiterbahnenbereich.

Die Anbringung der Heizung mittels Kleberschichten wird durch die gute Wärmeübertragung zwischen Kochplatte und Kochgefäße ermöglicht, die die Temperaturen an der Heizung niedrig hält.

## Patentansprüche

1. Kontaktwärmeübertragendes Kochsystem mit einer Elektrokochplatte (11) zur Erwärmung von Kochgefäßen (25) mit einem Kochplattenkörper (14), wobei der Kochplattenkörper (14) die Form einer Scheibe auf der Basis nicht oxydischer Keramik aufweist, und einer Kochfläche (23), deren Makro- und Mikro-Unebenheit, nämlich ihre Abweichung von einer idealen Ebene und ihre Rauhigkeit, in einem Temperaturbereich zwischen der Raumtemperatur und ca. 500K in einem überwiegenden Teil ihres Kochbereiches (22) 0,1 mm nicht überschreitet.

2. Kontaktwärmeübertragendes Kochsystem, enthaltend wenigstens eine Elektrokochplatte (11) mit einem Kochplattenkürper (14), wobei der Kochplattenkörper (14) die Form einer Scheibe auf der Basis nicht oxydischer Keramik aufweist, und wenigstens ein Kochgefäß (25), wobei die Elektrokochplatte (11) und das Kochgefäß (25) so aneinander angepaßt sind, daß ihre einander zugeordneten Flächen (23, 24) bzgl. ihrer Makro- und Mikro-Abstände voneinander in einem Temperaturbereich zwischen der Raumtemperatur und ca. 500K und im überwiegenden Teil des Kochbereiches (22) 0,1 mm nicht überschreitet.

3. Kochsystem nach Anspruch 2, **dadurch gekennzeichnet, daß** die zusammenwirkenden Flächen (23, 24) von Elektrokochplatte (11) und Kochgefäß (25) in allen Arbeits-Temperaturbereichen gleiche Kugel- bzw. Kugelkalottenflächen bilden.

4. Kochsystem nach einem der vorhergehenden Ansprüche, **dadurch gekennzeichnet, daß** die Unebenheit bzw. die Abstände 0,05 mm nicht überschreiten und/oder die Unebenheit bzw. die Abstände über im wesentlichen die gesamte Kochfläche (23) unter 0,1 mm betragen.

5. Kochsystem nach einem der vorhergehenden Ansprüche, **dadurch gekennzeichnet, daß** der Temperaturbereich, in dem die Unebenheit bzw. die Abstände unter 0,1 mm, vorzugsweise unter 0,05 mm betragen, sich bis 600K erstreckt.

6. Kochsystem nach einem der vorhergehenden Ansprüche, **dadurch gekennzeichnet, daß** die Keramik überwiegend Siliziumnitrid (Si_{3N,N}4) enthält, ggf. auch Siliziumcarbid (SiC) sowie ggf. Additive, die der Platte besondere mechanische, thermische, elektrische und/oder optische Eigenschaften verleihen, wobei ggf. Additive mit geringer optischer Wirkung einzeln oder aus einer Kombination von mindestens zwei der folgenden Substanzen bestehen: Yttriumoxid und andere Oxide der Seltenen Erden; Aluminiumnitrid, Aluminiumoxid, Magnesiumoxid, Calciumoxid einzeln oder als Verbindung untereinander bestehen und/oder eine Siliziumnitridkeramik als Additiv Siliziumcarbid in einem Gewichtsanteil von 2 % bis 50 % enthält, um Grüntöne zu erzeugen; Titannitrid und/oder Titancarbid und/oder Titancarbonnitrid in einem Gewichtsanteil von 2 % bis 30 % enthält, um Braun/Goldtöne zu erzeugen; Zirkonnitrid in einem Gewichtsanteil von 1 % bis 10 % enthält, um Gelbtöne zu erzeugen; silizidbildende Übergangsmetalle (z.B. Fe, Cr, Ni, Mo, W, Co) einzeln oder in Verbindungen oder Gemischen in einem Gewichtsanteil von 0,2 % bis 20 % enthält, um Schwarztöne zu erzeugen und/oder Kombinationen der Additive zur Erzeugung von Zwischentönen (Farbstufen) enthält und/oder das Siliziumnitrid hochrein und damit hellgrau bis gelblich weiß ist.

7. Kochsystem nach einem der vorhergehenden Ansprüche, **dadurch gekennzeichnet, daß** die Wärmedurchgangszahl in der Kochplatte (11), nämlich das Verhältnis der Wärmeleitfähigkeit (lambda) zur durchschnittlichen Kochplattenkörperdicke (d) im Kochbereich kleiner als 20.000, vorzugsweise zwischen 3.000 und 20.000, insbesondere zwischen 6.000 und 12.000 W/m²K beträgt.

8. Kochsystem nach einem der vorhergehenden Ansprüche, **dadurch gekennzeichnet, daß** die Wärmeleitfähigkeit des Kochplattenkörpermaterials zwischen 5 und 40, vorzugsweise 8 und 20 W/mK beträgt.

9. Kochsystem nach einem der vorhergehenden Ansprüche, **dadurch gekennzeichnet, daß** die Wärmeausdehnungszahl (alpha) des Kochplattenkörpermaterials kleiner ist als 12 x 10⁻⁶[1/K] und vorzugsweise zwischen 2 und 10⁻⁶ und 6 x 10⁻⁶ [1/K] beträgt.

10. Kochsystem nach einem der vorhergehenden Ansprüche, **dadurch gekennzeichnet, daß** die Speicherenergie des Kochplattenkörpers (14), bezogen auf ihre installierte Leistung, zwischen und 7 und 130 J/W, bevorzugt 10 bis 50 J/W beträgt.

11. Kochsystem nach einem der vorhergehenden Ansprüche, **dadurch gekennzeichnet, daß** die Oberflächenbelastung, nämlich die installierte Leistung der Elektrokochplatte je Flächeneinheit des Kochbereiches (22) zwischen 4 und 16 W/cm², vorzugsweise 5 bis 7 W/cm², beträgt.

12. Kochsystem nach einem der vorhergehenden Ansprüche, **dadurch gekennzeichnet, daß** die durchschnittliche Dicke (d) des Kochplattenkörpers (14) im Kochbereich (22) zwischen 2 und 5 mm, bevorzugt 3 mm, beträgt.

13. Kochsystem nach einem der vorhergehenden Ansprüche, **dadurch gekennzeichnet, daß** der Kochplattenkörper (14) eine an der Ober- und Unterseite (23, 27) zumindest bzgl. ihrer Makrogestalt ebene Scheibe ist und/oder die Kochfläche (23) des Kochplattenkörpers (24) zumindest im Kochbereich (22) geschliffen ist und/oder die Härte der Kochfläche (23) des Kochplattenkörpers (14) im Kochbereich (22) über 1400 (HV 10 nach DIN 50133) beträgt.

14. Kochsystem nach einem der vorhergehenden Ansprüche, **dadurch gekennzeichnet, daß** der spezifische elektrische Widerstand des Materials des Kochplattenkörpers (14) über 1 x 10⁶, vorzugsweise über ca. 1 x 10¹³ Ohm/cm beträgt.

15. Kochsystem nach einem der vorhergehenden Ansprüche, **dadurch gekennzeichnet, daß** der Kochplattenkörper (14) durch einen auf seine Unterseite (27) aufgebrachten Heizwiderstand (17) beheizt ist, wobei vorzugsweise der Heizwiderstand (17) in Form von Leiterbahnen (29) geführt ist, die spiralig und/oder radial verlaufen, insbesondere mit verringerter Leistungsdichte bzw. größerem Leiterbahn-Abstand (90) zur Mitte des Kochplattenkörpers (14) hin, ggf. durch Verkürzung der Widerstandswirksamkeit bzw. Kurzschließen einzelner der Leiterbahnen (29), wobei ggf. zur Schaffung von Mehrkreis-Kochplatten verschiedene Heizzonen (91, 92), insbesondere mit einer mittleren stets eingeschalteten Hauptheizzone (91) und einer dieser zuschaltbaren äußeren Zuschalt-Heizzone (92), gebildet ist, vorzugsweise durch von einem im Grenzbereich zwischen den Heizzonen (91, 92) verlaufenden Zuleitungsstrang (93), von dem aus spiralig oder radial nach innen und außen verlaufende Leiterbahnen (29) ausgehen.

16. Kochsystem nach einem der vorhergehenden Ansprüche, **dadurch gekennzeichnet, daß** der Heizwiderstand (17) ein aus einer aufgedruckten Paste gebildeter Dickschicht-Heizwiderstand, ein Dünnschicht-Heizwiderstand und/oder durch Spritzen (Flamm- und/oder Plasmaspritzen) aufgebracht ist und/oder zwischen Kochplattenkörper (14) und Heizwiderstand (17) eine Haftvermittlungs- und/oder elektrische Isolationsschicht, vorzugsweise aus Aluminiumoxid (Al₂O₃) aufgebracht ist, insbesondere durch Spritzen.

17. Kochsystem nach einem der vorhergehenden Ansprüche, **dadurch gekennzeichnet, daß** die Leiterbahnen (29) des Heizwiderstandes (17) durch Abstände voneinander getrennt sind, die durch Laser-Bearbeitung, Ätzen, Erodieren oder Schleifen hergestellt sind.

18. Kochsystem nach einem der vorhergehenden Ansprüche, **dadurch gekennzeichnet, daß** der Heizwiderstand (17) PTC-Charakteristik hat und/oder aus einer an die Unterseite (27) des Kochplattenkörpers (14) angedrückten bzw. angeklebten Folie besteht, wobei vorzugsweise der aus einem dünnen Band bestehende Heizwiderstand (17) insbesondere mittels einer Kleberschicht (121) mit seiner von dem Kochplattenkörper (14) abgewandten Rückseite (120) auf eine Isolierfolie (122) aufgebracht ist, während seine Vorderseite mit einer vorzugsweise wärmeleitenden auch die Zwischenräume zwischen den Heizwiderständen (17) ausfüllenden Kleberschicht (123) an die Unterseite (27) des Kochplattenkörpers (14) geklebt ist.

19. Kochsystem nach einem der vorhergehenden Ansprüche, **dadurch gekennzeichnet, daß** der Kochplattenkörper (14) an seiner Unterseite (27) entsprechend dem Verlauf der Heizleiterbahnen (29) profiliert ist, wobei die die Abstände bildenden Bereiche (43) über die Unterseite (27) nach unten hervorragen und an ihrer Oberfläche das nach der Aufbringung sie überdeckende Heizwiderstandsmaterial vorzugsweise durch Schleifen entfernt ist.

20. Kochsystem nach einem der vorhergehenden Ansprüche, **dadurch gekennzeichnet, daß** der Heizwiderstand (17) durch vorzugsweise nur Teilbereiche der Unterseite (26) des Kochplattenkörpers überdeckende, an ihrer Ober- und Unterseite elektrisch kontaktierte Heizwiderstandsschichten und/oder -plättchen (29a) gebildet ist, die insbesondere PTC-Charakteristik haben, wobei der Heizwiderstand (17) vorzugsweise aus zwei parallel zur Unterseite (27) des Kochplattenkörpers (14) verlaufenden und ggf. an diese angedrückten elektrisch leitenden Folien bzw. Schichten (44) bestehen, zwischen die PTC-Plättchen (29a) eingebracht sind.

21. Kochsystem nach einem der vorhergehenden Ansprüche, **dadurch gekennzeichnet, daß** Temperaturbegrenzer-Sensoren (37, 37a) mit über den Kochbereich (22) verteilt wirkendem Anspruchverhalten vorgesehen sind, die vorzugsweise nicht-summierend, insbesondere die Heizwiderstände (17) in ihrem Bereich selektiv abschaltend oder leistungsvermindernd geschaltet sind und/oder Temperaturbegrenzungssensoren (37) angrenzend an Heizleiterbahnen (29) in Zwischenräumen zwischen den Heizleiterbahnen (29) angeordnet sind.

22. Kochsystem nach einem der vorhergehenden Ansprüche, **dadurch gekennzeichnet, daß** eine Flächen-Überwachung mit NTC-Charakteristik von Temperaturbegrenzer-Sensoren (37a) vorgesehen ist, die vorzugsweise eine Sensorschicht (45) mit temperaturabhängiger Durchschlagscharakteristik enthält, wobei insbesondere die Sensorschicht (45) zwischen zwei Kontaktschichten (29, 46) parallel und unmittelbar thermisch kontaktierend an dem Heizwiderstand (29) liegt, wobei vorzugsweise als eine der Kontaktschichten der Heizwiderstand selbst (29) dient.

23. Kochsystem nach einem der vorhergehenden Ansprüche, **dadurch gekennzeichnet, daß** eine Regelung der Elektrokochplatte (11) eine Temperaturmessung an der Kochplatte (11) während einer kurzzeitigen Abschaltung (tₐ) oder Reduzierung der Heizleistung, ggf. schon beim Ankochen (85), beeinhaltet, wobei anhand der vor und nach der Abschaltung gemessenen Temperaturdifferenz (86, 86a) der weitere Kochvorgang geregelt oder gesteuert wird.

24. Kochsystem nach einem der vorhergehenden Ansprüche, **dadurch gekennzeichnet, daß** eine Steuerung der Elektrokochplatte (11) durch Parallel-, Einzel- und/oder Reihenschaltung mehrerer Heizwiderstandsabschnitte (31, 32, 33), eine sogenannte Mehrtaktschaltung, erfolgt, wobei vorzugsweise in einem Schaltbereich kleiner Leistung eine Impulssteuerung vorgesehen ist bzw. eine Steuerung durch Vollwellen-Impulspaketsteuerung erfolgt.

25. Kochsystem nach einem der vorhergehenden Ansprüche, **dadurch gekennzeichnet, daß** der Kochplattenkörper (14) selbsttragend in eine Ausnehmung (50) einer Einbauplatte (12) eingesetzt ist, die vorzugsweise aus Hartglas, Glaskeramik, Edelstahl, Natur- oder Kunststein besteht und vorzugsweise mit der Einbauplatte (12), z.B. durch einen wärmebeständigen Silikonkleber, verklebt ist, wobei insbesondere zwischen der Klebestelle (47) und dem Kochbereich (22) eine Wärmeisolierzone des Kochplattenkörpers vorgesehen ist.

26. Kochsystem nach einem der vorhergehenden Ansprüche, **dadurch gekennzeichnet, daß** die Kochfläche (22) des Kochptattenkörpers (14) fast ebenengleich mit, vorzugsweise nur 0,5 bis 1 mm über, der Oberfläche (28) einer Einbauplatte (12) eingebaut ist.

27. Kochsystem nach einem der vorhergehenden Ansprüche, **dadurch gekennzeichnet, daß** der Kochplattenkörper in eine Ausnehmung (50) einer Einbauplatte (12) eingeklebt ist, wobei vorzugsweise der Außenrand (15) des Kochplattenkörpers (14) und der Innenrand (16) der Ausnehmung (50) einander angepaßt konisch sind und/oder der Außenrand (15) angefast, angeschrägt oder abgerundet ist.

28. Kochsystem nach einem der vorhergehenden Ansprüche, **dadurch gekennzeichnet, daß** im Bereich einer Klebestelle (47) zwischen Kochplattenkörper (14) und einer Einbauplatte (12) eine Wärmebrücke (53), vorzugsweise in Form eines Auflageringes für den Kochplattenkörper (14), vorgesehen ist.

29. Kochsystem nach einem der vorhergehenden Ansprüche, **dadurch gekennzeichnet, daß** ein Auflageelement (53, 49) zur Begrenzung der Eindringtiefe des Kochplattenkörpers (14) in eine Ausnehmung (50) einer Einbauplatte (12) vorgesehen ist und/oder ein Haltering (20) für eine untere Abdeckung (21) der Elektrokochplatte (11) in die Ausnehmung (50) eingesetzt ist, vorzugsweise mit eingeklebt ist und/oder ein Einbauring (20) für den Einbau der Elektrokochplatte (11) in eine Einbauplatte (12) mit einschnappenden und/oder ausbiegbaren, widerhakenartigen Halteelementen (59, 61, 58, 66) versehen ist, die an dem Kochplattenkörper und/oder der Einbauplatte angreifen.

30. Kochsystem nach einem der vorhergehenden Ansprüche, **dadurch gekennzeichnet, daß** die Heizung (17) mit einer Wärmedämmung (18) unterlegt ist.

31. Kochsystem nach einem der vorhergehenden Ansprüche, **dadurch gekennzeichnet, daß** im die Elektrokochplatte (11) umgebenden Bereich eine im Betrieb der Elektrokochplatte (11) beleuchtete Zone (82), vorzugsweise eine umlaufende Ringzone, vorgesehen ist, die insbesondere durch Ausnehmungen im Dekor (75) einer Einbauplatte (12) und eine interne Beleuchtung (81) unter der Einbauplatte (12) ausgebildet ist, die ggf. ein Lichtleiterelement (83) wie einen glasartigen Ring, enthält.

32. Kochsystem nach einem der vorhergehenden Ansprüche, **dadurch gekennzeichnet, daß** in der Oberfläche (23, 24) des Kochplattenkörpers und/oder des Kochgefäß-Bodens (39) ein Belüftungskanal-System (110) vorgesehen ist.

## Claims

1. Contact heat-transmitting cooking system with an electric hotplate (11) for heating cooking utensils (25) with a hotplate body (14), which is in the form of a disk based on non-oxidic ceramic, and a cooking surface (23), whose macro and micro-unevenness, namely the divergence thereof from an ideal plane and the roughness thereof in a temperature range between ambient temperature and approximately 500 K does not exceed 0.1 mm in a preponderant part of its cooking area (22).

2. Contact heat-transmitting cooking system, containing at least one electric hotplate (11) with a hotplate body (14), which is in the form of a disk based on non-oxidic ceramic, and at least one cooking utensil (25), the electric hotplate (11) and cooking utensil (25) being adapted to one another in such a way that their associated surfaces (23, 24) with respect to their mutual macro and micro-spacings in a temperature range between ambient temperature and approximately 500 K and in most of the cooking area (22) do not exceed 0.1 mm.

3. Cooking system according to claim 2, **characterized in that** the cooperating surfaces (23, 24) of electric hotplate (11) and cooking utensil (25) form the same spherical or spherical segmental surfaces in all the operating temperature ranges.

4. Cooking system according to one of the preceding claims, **characterized in that** the unevenness or the spacings do not exceed 0.5 mm and/or the unevenness or the spacings are below 0.1 mm over substantially the entire cooking surface (23).

5. Cooking system according to one of the preceding claims, **characterized in that** the temperature range in which the unevenness or the spacings are under 0.1 mm, preferably under 0.05 mm, extends up to 600 K.

6. Cooking system according to one of the preceding claims, **characterized in that** the ceramic contains preponderantly silicon nitride (Si_{3N,N}4), optionally also silicon carbide (SiC) and optionally additives, which give the plate special mechanical, thermal, electrical and/or optical properties, and optionally additives with a limited optical action comprise individually or a combination of at least two of the following substances: yttrium oxide and other oxides of rare earths, aluminium nitride, aluminium oxide, magnesium oxide, calcium oxide individually or as a combination and/or a silicon nitride contains as an additive silicon carbide in a weight proportion of 2 to 50% in order to produce green shades, titanium nitride and/or titanium carbide and/or titanium carbonitride in a weight proportion of 2 to 30% in order to produce brown/gold shades, zirconium nitride in a weight proportion of 1 to 10% to produce yellow shades, silicide-forming transition metals (e.g. Fe, Cr, Ni, Mo, W, Co) individually or in combination or mixture in a weight proportion of 0.2 to 20% to produce black shades and/or combinations of the additives for producing intermediate shades (colour gradations) and/or the silicon nitride is of high purity and therefore light grey to yellowish white.

7. Cooking system according to one of the preceding claims, **characterized in that** the heat transmission coefficient in the hotplate (11), namely the ratio of the thermal conductivity (lambda) to the average hotplate body thickness (d) in the cooking area is below 20,000, preferably between 3,000 and 20,000, particularly between 6,000 and 12,000 W/m²K.

8. Cooking system according to one of the preceding claims, **characterized in that** the thermal conductivity of the hotplate body material is between 5 and 40, preferably 8 and 20 W/mK.

9. Cooking system according to one of the preceding claims, **characterized in that** the thermal expansion coefficient (alpha) of the hotplate body material is below 12 x 10⁻⁶[1/K] and preferably between 2 and 10⁻⁶ and 6 x 10⁻⁶ [1/K].

10. Cooking system according to one of the preceding claims, **characterized in that** the storing energy of the hotplate body (14), based on its installed capacity or power, is between 7 and 130 J/W, preferably between 10 and 50 J/W.

11. Cooking system according to one of the preceding claims, **characterized in that** the surface loading, namely the installed power of the electric hotplate per surface unit of the cooking area (22) is between 4 and 16 W/cm², preferably between 5 and 7 W/cm².

12. Cooking system according to one of the preceding claims, **characterized in that** the average thickness (d) of the hotplate body (14) in the cooking area (22) is between 2 and 5 mm and is preferably 3 mm.

13. Cooking system according to one of the preceding claims, **characterized in that** the hotplate body (14) is at least with respect to its macro-design a planar disk on the top and bottom (23, 27) and/or the cooking surface (23) of the hotplate body (24) is ground at least in the cooking area (22) and/or the hardness of the cooking surface (23) of the hotplate body (14) in the cooking area (22) is above 1400 (HV 10 according to DIN 50133).

14. Cooking system according to one of the preceding claims, **characterized in that** the specific electrical resistivity of the material of the hotplate body is above 1 x 10⁶, preferably above approximately 1 x 10¹³ ohm/cm.

15. Cooking system according to one of the preceding claims, **characterized in that** the hotplate body (14) is heated through a heating resistor (17) applied to its underside (27) and preferably the heating resistor (17) is guided in the form of conducting tracks which run in spiral and/or radial manner, particularly with a reduced power density or larger conducting track spacing (90) towards the centre of the hotplate body (14), optionally by shortening the resistance activity or short-circuiting individual conducting tracks (29), where optionally or creating multicircuit hotplates different heating zones (91, 92) are in particular formed with a central, constantly connected in main heating zone (91) and an outer connect-in heating zone (92) which can be connected in thereto, preferably through a lead strand (93) running in the boundary area between the heating zones (91, 92) and from which emanate spirally or radially inwardly and outwardly directed conducting tracks (29).

16. Cooking system according to one of the preceding claims, **characterized in that** the heating resistor (17) is a thick film heating resistor formed from a printed on paste, a thin film heating resistor and/or is applied by spraying (flame and/or plasma spraying) and/or between the hotplate body (14) and heating resistor (17) is applied an adhesion promoting and/or electrical insulating layer, preferably of aluminium oxide (Al₂O₃), particularly by spraying.

17. Cooking system according to one of the preceding claims, **characterized in that** the conducting tracks (29) of the heating resistor (17) are separated from one another by spacings produced by laser machining, etching, eroding or grinding.

18. Cooking system according to one of the preceding claims, **characterized in that** the heating resistor (17) has PTC characteristics and/or comprises a foil pressed or stuck onto the underside (27) of the hotplate body (14), where preferably the heating resistor (17) comprising a thin strip is applied by its rear (120) remote from the hotplate body (14) by means of an adhesive coating (121) to an insulating foil (122), whilst its front is stuck by a preferably heat conducting adhesive coating (123) also filling the gaps between the heating resistors (17) to the underside (27) of the hotplate body (14).

19. Cooking system according to one of the preceding claims, **characterized in that** the underside (27) of the hotplate body (14) is profiled in accordance with the path of the heating conductor tracks (29), the areas (43) forming the spacings project downwards over the underside (27) and at the surface thereof the heating resistor material covering them after application is removed, preferably by grinding.

20. Cooking system according to one of the preceding claims, **characterized in that** the heating resistor (17) is formed by heating resistor layers and/or plates (29a) preferably only covering partial areas of the hotplate body underside (26) and electrically contacted at its top and bottom and which in particular have PTC characteristics, the heating resistor (17) preferably comprising two electrically conductive foils or layers (44) running parallel to the underside (27) of the hotplate body (14) and optionally pressed onto the same and being introduced between the PTC plates (29a).

21. Cooking system according to one of the preceding claims, **characterized in that** temperature limiting sensors (37, 37a) are provided with a response behaviour distributed over the cooking area (22) and which preferably in non-summating manner, more particularly selectively disconnect or reduce the power of the heating resistor (17) and/or temperature limiting sensors (37) are located adjacent to and in gaps between the heating conductor tracks (29).

22. Cooking system according to one of the preceding claims, **characterized in that** there is a surface monitoring with NTC characteristics of temperature limiting sensors (37a) preferably containing a sensor layer (45) with temperature-dependent breakdown characteristics and in particular the sensor layer (45) between two contact layers (29, 46) is positioned in parallel and in directly thermally contacting manner with respect to the heating resistor (29), the latter serving in preferred manner as one of the contact layers.

23. Cooking system according to one of the preceding claims, **characterized in that** a control of the electric hotplate (11) involve a temperature measurement at the hotplate (11) during a brief disconnection (tₐ) or reduction of the heating power, optionally during parboiling (85) and by means of the temperature difference (86, 86a) measured before and after disconnection the further cooking process is regulated or controlled.

24. Cooking system according to one of the preceding claims, **characterized in that** there is a control of the electric hotplate (11) by the parallel, single and/or series connection of several heating resistor sections (31, 32, 33), a so-called multicycle switching, where preferably in a low power switching range a pulse control is provided or there is a full wave pulse packet control.

25. Cooking system according to one of the preceding claims, **characterized in that** the hotplate body (14) is inserted in self-supporting manner in a recess (50) of a trim plate (12), which is preferably made from hard glass, glass ceramic, stainless steel, natural or artificial stone and is preferably bonded to the trim plate (12), e.g. by a heat-resistant silicone adhesive and in particular a thermal insulation zone of the hotplate body is provided between the adhesion point (47) and the cooking area (22).

26. Cooking system according to one of the preceding claims, **characterized in that** the cooking surface (22) of the hotplate body (14) is installed in almost equiplanar manner with the surface (28) of a trim plate (12), preferably with only 0.5 to 1 mm above the same.

27. Cooking system according to one of the preceding claims, **characterized in that** the hotplate body is bonded into a recess (50) of a trim plate (12) and preferably the outer rim (15) of the hotplate body (14) and the inner rim (16) of the recess (50) are conically adapted in one another and/or the outer rim (15) is chamfered, bevelled or rounded.

28. Cooking system according to one of the preceding claims, **characterized in that** in the vicinity of an adhesion point (47) between the hotplate body (14) and the trim plate (12) a heat bridge (53), preferably in the form of a support ring for the hotplate body (14), is provided.

29. Cooking system according to one of the preceding claims, **characterized in that** a support element (53, 49) is provided or limiting the penetration depth of the hotplate body (14) into a recess (50) of a trim plate (12) and/or a holding ring (20) for a lower cover (21) of the electric hotplate (11) is inserted in the recess (50), preferably bonded in therewith and/or a trim ring (20) for the installation of the electric hotplate (11) in a trim plate (12) is provided with snap-in and/or bend-out, barb-like holding elements (59, 61, 58, 66), which engage on the hotplate body and/or trim plate.

30. Cooking system according to one of the preceding claims, **characterized in that** the heater (17) is underlaid with a thermal insulation (18).

31. Cooking system according to one of the preceding claims, **characterized in that** in the area surrounding the electric hotplate (11) is provided a zone, preferably a circumferential ring zone, illuminated when the hotplate (11) is operating and which is in particular formed by recesses in the decoration (75) of a trim plate (12) and an internal lighting (81) exists under the plate (12) and optionally contains a light guide element (83) such as a glasslike ring.

32. Cooking system according to one of the preceding claims, **characterized in that** a ventilation duct system (110) is provided in the surface (23, 24) of the hotplate body and/or the cooking utensil bottom (39).

## Revendications

1. Système de cuisson, transférant de la chaleur par contact avec une plaque de cuisson électrique (11) pour le chauffage de récipients de cuisson (25) au moyen d'un corps de plaque de cuisson (14), sachant que le corps de plaque de cuisson (14) présente la forme d'une plaque en un matériau céramique qui n'est pas formé d'oxyde, et avec une surface de cuisson (23), dont l'aspérité macroscopique et microscopique, c'est-à-dire sa dissemblance par rapport à une surface idéale plane et sa rugosité, ne dépasse pas 0,1 mm dans la plus grande partie de son domaine de cuisson (22) et dans un domaine de température entre la température ambiante et à peu près 500 K.

2. Système de cuisson, transférant de la chaleur par contact comprenant au moins une plaque de cuisson électrique (11) avec un corps de plaque de cuisson (14), sachant que le corps de plaque de cuisson (14) présente la forme d'une plaque en un matériau céramique qui n'est pas formé d'oxyde, et avec au moins un récipient de cuisson (25), la plaque de cuisson électrique (11) et le récipient de cuisson (25) étant adaptés l'un à l'autre de telle manière que leurs surfaces (23, 24) correspondantes ne dépassent pas 0,1 mm en ce qui concerne leur écart macroscopique et microscopique dans la plus grande partie du domaine de cuisson (22) et dans un domaine de température entre la température ambiante et à peu près 500 K.

3. Système de cuisson d'après la revendication 2, **caractérisé en ce que** les surfaces (23, 24) qui agissent conjointement de la plaque de cuisson électrique (11) et du récipient de cuisson (25) forment les mêmes surfaces sphériques ou encore de calotte sphérique dans tous les domaines de température de service.

4. Système de cuisson d'après une des revendications précédentes, **caractérisé en ce que** l'aspérité ou encore les écarts ne dépassent pas 0, 05 mm et/ou que l'aspérité ou encore les écarts comportent une valeur au-dessous de 0,1 mm essentiellement sur toute la surface de cuisson (23).

5. Système de cuisson d'après une des revendications précédentes, **caractérisé en ce que** le domaine de température, dans lequel l'aspérité ou encore les écarts comportent une valeur au-dessous de 0,1 mm, de préférence au-dessous de 0,05 mm, s'étend jusqu'à 600 K.

6. Système de cuisson d'après une des revendications précédentes, **caractérisé en ce que** le matériau céramique contient principalement du nitrure de silicium (Si₃N₄), éventuellement aussi du carbure de silicium (SiC) ainsi qu'éventuellement des additifs, qui impriment des propriétés mécaniques, thermiques, électriques et/ou optiques particulières à la plaque, sachant éventuellement que des additifs qui présentent un léger effet optique sont composés d'une ou d'une combinaison d'au moins deux des substances suivantes : yttria et d'autres oxydes de terres rares ; azoture d'aluminium, oxyde d'aluminium, oxyde de magnésium, oxyde de calcium, les substances étant prises individuellement ou bien sous forme de composition de ces substances et/ou qu'une céramique d'azoture de silice contient en tant qu'additif du carbure de silicium dans une fraction pondérale de 2 % à 50 % pour produire un ton vert ; du nitrure de titane et/ou du carbure de titane et/ou carbonitrure de titane dans une fraction pondérale de 2 % à 30 % pour produire un ton brun/doré ; azoture de zircon dans une fraction pondérale de 1 % à 10 % pour produire un ton jaune ; qu'elle contient des métaux transitoires qui peuvent constituer des siliciures (par exemple Fe, Cr, Ni, Mo, W, Co) individuellement ou bien sous forme de composition ou de mélange dans une fraction pondérale de 0,2 % à 20 % pour produire un ton noirâtre et/ou des combinaisons des additifs pour produire des tons intermédiaires (une nuance des couleurs) et/ou que le nitrure de silicium est de grande pureté et que le ton de couleur correspond par conséquent à un gris claire jusqu'à un blanc jaunâtre.

7. Système de cuisson d'après une des revendications précédentes, **caractérisé en ce que** le coefficient global de transmission thermique dans la plaque de cuisson (11), c'est-à-dire le rapport entre la conductance thermique (lambda) et l'épaisseur moyenne du corps de plaque de cuisson (d) est inférieur à 20.000, de préférence à une valeur entre 3.000 et 20.000, notamment entre 6.000 et 12.000 W/m²K.

8. Système de cuisson d'après une des revendications précédentes, **caractérisé en ce que** la conductance thermique du matériau du corps de plaque de cuisson comporte une valeur entre 5 et 40, de préférence entre 8 et 20 W/mK.

9. Système de cuisson d'après une des revendications précédentes, **caractérisé en ce que** le coefficient de dilatation thermique (alpha) du matériau du corps de la plaque de cuisson est inférieur à 12 x 10⁻⁶ [1/K] et de préférence entre 2 x 10⁻⁶ et 6 x 10⁻⁶ [1/K].

10. Système de cuisson d'après une des revendications précédentes, **caractérisé en ce que** l'énergie accumulée du corps de plaque de cuisson (14) par rapport à sa puissance installée comporte une valeur entre 7 et 130 J/W, de préférence entre 10 et 50 J/W.

11. Système de cuisson d'après une des revendications précédentes, **caractérisé en ce que** la charge de surface, c'est-à-dire la puissance installée de la plaque de cuisson électrique par unité de surface du domaine de cuisson (22) comporte une valeur entre 4 et 16 W/cm², de préférence entre 5 et 7 W/cm².

12. Système de cuisson d'après une des revendications précédentes, **caractérisé en ce que** l'épaisseur moyenne (d) du corps de plaque de cuisson (14) dans le domaine de cuisson (22) comporte une valeur entre 2 et 5 mm, de préférence 3 mm.

13. Système de cuisson d'après une des revendications précédentes, **caractérisé en ce que** le corps de plaque de cuisson (14) est une plaque plane à la face supérieure et inférieure (23, 27) au moins en ce qui concerne sa forme macroscopique et/ou que la surface de cuisson (23) du corps de plaque de cuisson (24) est polie au moins dans le domaine de cuisson (22) et/ou que la dureté de la surface de cuisson (23) du corps de plaque de cuisson (14) comporte au-dessus de 1400 (HV10 d'après DIN 50133) dans le domaine de cuisson (22).

14. Système de cuisson d'après une des revendications précédentes, **caractérisé en ce que** la résistance électrique spécifique du matériau du corps de plaque de cuisson (14) comporte plus que 1 x 10⁶, de préférence plus que 1 x 10¹³ Ohm/cm approximativement.

15. Système de cuisson d'après une des revendications précédentes, **caractérisé en ce que** le corps de plaque de cuisson (14) est chauffé par une résistance chauffante (17) disposée à sa face inférieure (27), sachant que de préférence la résistance chauffante (17) est menée sous forme de pistes conductrices (29), qui s'étendent sous forme spirale et/ou radiale, notamment avec une puissance volumique réduite ou encore avec un écart agrandi de pistes conductrices (90) en direction du centre du corps de plaque de cuisson (14), éventuellement en réduisant l'efficacité de la résistance ou encore en court-circuitant certaines pistes conductrices (29), différentes zones de chauffe (91, 92) étant éventuellement formées, pour la création de plaques de cuisson à plusieurs circuits, notamment avec une zone de chauffe principale (91) centrale toujours allumée et une zone de chauffe supplémentaire (92) extérieure qui peut être connectée à celle-ci, de préférence au moyen de pistes conductrices (29) qui proviennent, sous forme spirale ou radiale en s'étendant vers l'intérieur et l'extérieur, d'un conducteur d'amenée (93) qui s'étend dans le domaine limite entre les zones de chauffe (91, 92).

16. Système de cuisson d'après une des revendications précédentes, **caractérisé en ce que** la résistance chauffante (17) est une résistance chauffante à couche épaisse, une résistance de chauffe à couche mince et/ou que celle-ci est appliquée par projection (par projection à la flamme et/ou par projection au plasma) et/ou qu'une couche d'agent adhésif et/ou une couche électriquement isolante de préférence en oxyde d'aluminium (AL₂O₃) est appliquée notamment par projection entre le corps de plaque de cuisson (14) et la résistance chauffante (17).

17. Système de cuisson d'après une des revendications précédentes, **caractérisé en ce que** les pistes conductrices (29) de la résistance chauffante (17) sont séparées entre elles par des écarts, qui sont produits par usinage à laser, par gravure, par érosion ou par abrasion.

18. Système de cuisson d'après une des revendications précédentes, **caractérisé en ce que** la résistance chauffante (17) présente une caractéristique à coefficient positif de température (PTC) et/ou qu'elle est constituée d'une pellicule serrée ou encore collée à la face inférieure (27) du corps de plaque de cuisson (14), sachant que de préférence la résistance chauffante (17) constituée d'une bande mince est appliquée notamment au moyen d'une couche collante (121) par le verso (120), orienté dans le sens opposé du corps de plaque de cuisson (14), sur une pellicule isolante (122), tandis que le recto est collé, au moyen d'une couche collante (123) conduisant préférablement la chaleur et remplissant également les espaces entre les résistances chauffantes (17), à la face inférieure (27) du corps de plaque de cuisson (14).

19. Système de cuisson d'après une des revendications précédentes, **caractérisé en ce que** le corps de plaque de cuisson (14) est profilé à sa face inférieure (27) de manière à correspondre au parcours des pistes conductrices de chauffage (29), les domaines (43) qui forment les écarts saillant vers le bas au-delà de la face inférieure (27) et que le matériau de la résistance chauffante, qui le recouvre après l'application, est enlevé de sa surface de préférence par abrasion.

20. Système de cuisson d'après une des revendications précédentes, **caractérisé en ce que** la résistance chauffante (17) est formée par des couches et/ou des feuillets de résistance chauffante (29a) qui recouvrent de préférence seulement des domaines partiaux de la face inférieure (26) du corps de plaque de cuisson et dont le contact électrique est établi à leur face supérieure et inférieure, et qui présentent une caractéristique à coefficient positif de température (PTC), sachant que la résistance chauffante (17) est constituée de préférence de deux pellicules ou couches (44) électriquement conductibles, parallèles à la face inférieure (27) du corps de plaque de cuisson (14) et éventuellement serrées contre celle-ci, des feuillets à coefficient positif de température (PTC) étant introduits entre ces couches.

21. Système de cuisson d'après une des revendications précédentes, **caractérisé en ce qu'**on prévoit des capteurs pour la limitation de la température (37, 37a), avec un mode de réponse agissant de manière distribuée sur le domaine de cuisson (22), qui sont montés de préférence de manière non intégrante et notamment de manière à mettre sélectivement hors circuit ou bien à réduire sélectivement la puissance des résistances chauffantes (17) dans leur domaine et/ou que des capteurs pour la limitation de la température (37) sont disposés dans des espaces intermédiaires entre les pistes conductrices de chauffage (29) à proximité de celles-ci.

22. Système de cuisson d'après une des revendications précédentes, **caractérisé en ce qu'**on prévoit un contrôle de surface présentant une caractéristique NTC des capteurs pour la limitation de la température (37a), qui comprend de préférence une couche de détecteur (45) à caractéristique de décharge disruptive qui dépend de la température, la couche de détecteur (45) étant située notamment entre deux couche de contact (29, 46) en parallèle à et avec un contact thermique direct avec la résistance chauffante (29), la résistance chauffante (29) même étant employé de préférence en tant qu'une des couche de contact.

23. Système de cuisson d'après une des revendications précédentes, **caractérisé en ce qu'**un réglage de la plaque de cuisson électrique (11) comporte une thermométrie auprès de la plaque de cuisson (11) pendant un débranchement momentané (tₐ) ou une réduction de la puissance calorifique, éventuellement déjà pendant le début du processus de chauffage (85), le processus de chauffage ultérieur étant réglé ou commandé selon la différence de température (86, 86a) mesurée avant et après le débranchement.

24. Système de cuisson d'après une des revendications précédentes, **caractérisé en ce que** une commande de la plaque de cuisson électrique (11) est produite par la mise en parallèle, par le service individuel et/ou par la mise en cascade de plusieurs sections de résistance chauffante (31, 32, 33), c'est-à-dire par un circuit à sélection multiple, en sachant qu'on prévoit de préférence dans un domaine de couplage à puissance limitée une commande par impulsions ou encore une commande par paquets d'impulsions à onde pleine.

25. Système de cuisson d'après une des revendications précédentes, **caractérisé en ce que** le corps de plaque de cuisson (14) est inséré de manière autoportante dans un creux (50) d'une plaque à encastrer (12), qui est composée de préférence de verre dur, de vitrocéramique, d'acier affiné, de pierre naturelle ou d'aggloméré et que le corps de plaque de cuisson est collé de préférence à la plaque à encastrer (12) par exemple au moyen d'une colle au silicone résistant aux hautes températures, sachant que notamment entre l'endroit de collage (47) et le domaine de cuisson (22) on prévoit une zone d'isolation thermique du corps de plaque de cuisson.

26. Système de cuisson d'après une des revendications précédentes, **caractérisé en ce que** la surface de cuisson (22) du corps de plaque de cuisson (14) se trouve quasiment dans le plan de la surface (28) d'une plaque à encastrer (12), de préférence seulement 0,5 jusqu'à 1 mm au-dessus de celle-ci.

27. Système de cuisson d'après une des revendications précédentes, **caractérisé en ce que** le corps de plaque de cuisson est collé dans un creux (50) d'une plaque à encastrer (12), sachant que le bord extérieur (15) du corps de plaque de cuisson (14) et le bord intérieur (16) du creux (50) sont adaptés de manière conique et/ou que le bord extérieur (15) est biseauté, oblique ou arrondi.

28. Système de cuisson d'après une des revendications précédentes, **caractérisé en ce que** dans le domaine d'un endroit de collage (47) entre un corps de plaque de cuisson (14) et une plaque à encastrer (12) est prévu un pont thermique (53), de préférence sous forme d'un anneau d'appui pour le corps de plaque de cuisson (14).

29. Système de cuisson d'après une des revendications précédentes, **caractérisé en ce qu'**un élément d'appui (53, 49) est prévu pour limiter la profondeur de pénétration du corps de plaque de cuisson (14) dans un creux (50) d'une plaque à encastrer (12) et/ou un anneau d'appui (20) est introduit et de préférence collé dans le creux (50) pour un recouvrement inférieur (21) de la plaque de cuisson électrique (11) et/ou que l'anneau de montage (20) est muni, pour le montage de la plaque de cuisson électrique (11) dans une plaque à encastrer (12), d'éléments de support (59, 61, 58, 66) à déclic et/ou pliables en forme de crochet, qui s'engagent sur le corps de plaque de cuisson et/ou sur la plaque à encastrer.

30. Système de cuisson d'après une des revendications précédentes, **caractérisé en ce qu'**une isolation thermique (18) se trouve sous le chauffage (17).

31. Système de cuisson d'après une des revendications précédentes, **caractérisé en ce qu'**on prévoit dans le domaine de la plaque de cuisson électrique (11) une zone (82) éclairée pendant le service de la plaque électrique de cuisson (11), de préférence une zone annulaire circulaire, qui est réalisée notamment par des creux dans le décor (75) d'une plaque à encastrer (12) et où un éclairage intérieur (81) est réalisé sous la plaque à encastrer (12) et comprend éventuellement un élément de guidage optique (83), tel qu'un anneau en matériau vitreux.

32. Système de cuisson d'après une des revendications précédentes, **caractérisé en ce qu'**on prévoit un système de conduits d'aération (110) dans la surface (23, 24) du corps de plaque de cuisson et/ou du fond (39) du récipient de cuisson.
